# EUROPEAN PATENT SPECIFICATION

(11) **EP 3 720 216 B1**
(45) Date of publication and mention of the grant of the patent: **02.07.2025**
(21) Application number: 18884621.6
(22) Date of filing: 28.11.2018
(51) Int. Cl.: H04W 72/21, H04L 5/00, H04W 72/0453

(54) **USER TERMINAL AND WIRELESS COMMUNICATION METHOD**
BENUTZERENDGERÄT UND DRAHTLOSKOMMUNIKATIONSVERFAHREN
TERMINAL UTILISATEUR, ET PROCÉDÉ DE COMMUNICATION SANS FIL

(30) Priority: 29.11.2017 JP 2017241135
(43) Date of publication of application: 07.10.2020
(73) Proprietor: NTT DOCOMO, INC., Chiyoda-ku Tokyo 100-6150 (JP)
(72) Inventor: MATSUMURA, Yuki, Tokyo 100-6150 (JP); TAKEDA, Kazuki, Tokyo 100-6150 (JP); NAGATA, Satoshi, Tokyo 100-6150 (JP)
(74) Representative: Hoffmann Eitle
(86) International application number: PCT/JP2018/043821
(87) International publication number: WO 2019/107432

(56) References cited:
- HUAWEI ET AL: "Long PUCCH for UCI of up to 2 bits", vol. RAN WG1, no. Reno, USA; 20171127 - 20171201, 18 November 2017 (2017-11-18), XP051369303, Retrieved from the Internet <URL:http://www.3gpp.org/ftp/tsg%5Fran/WG1%5FRL1/TSGR1%5F91/Docs/> [retrieved on 20171118]
- ZTE ET AL: "NR PUCCH resource allocation", vol. RAN WG1, no. Prague, CZ; 20171009 - 20171013, 8 October 2017 (2017-10-08), XP051340706, Retrieved from the Internet <URL:http://www.3gpp.org/ftp/Meetings_3GPP_SYNC/RAN1/Docs/> [retrieved on 20171008]
- NTT DOCOMO ET AL: "Long-PUCCH for UCI of up to 2 bits", vol. RAN WG1, no. Reno, USA; 20171127 - 20171201, 18 November 2017 (2017-11-18), XP051370245, Retrieved from the Internet <URL:http://www.3gpp.org/ftp/tsg%5Fran/WG1%5FRL1/TSGR1%5F91/Docs/> [retrieved on 20171118]
- NTT DOCOMO INC.: "Long-PUCCH for UCI of up to 2 bit s", 3GPP TSG RAN WG1 #91 R1-1720816, vol. RAN WG1, 18 November 2017 (2017-11-18), pages 1 - 10, XP051370245
- NTT DOCOMO INC.: "Long-PUCCH for UCI of up to 2 bits", 3GPP TSG RAN WG1 #90B R1-1718210, vol. RAN WG1, 3 October 2017 (2017-10-03), pages 1 - 9, XP051352918

## Description

### Technical Field

The present invention relates to a user terminal and a radio communication method in next-generation mobile communication systems.

### Background Art

In the UMTS (Universal Mobile Telecommunications System) network, the specifications of Long-Term Evolution (LTE) have been drafted for the purpose of further increasing high speed data rates, providing lower latency, and so on (see non-patent literature 1). In addition, successor systems of LTE (referred to as, for example, "LTE-A (LTE-Advanced)," "FRA (Future Radio Access)," "4G," "5G," "5G+ (plus)," "NR (New RAT)," "LTE Rel. 14," "LTE Rel. 15 (or later versions)," etc.) are also under study for the purpose of achieving further broadbandization and increased speed beyond LTE.

In existing LTE systems (for example, LTE Rel. 8 to 13), downlink (DL) and/or uplink (UL) communication are carried out using 1-ms subframes (also referred to as "transmission time intervals (TTIs)" and so on). These subframes are the time unit for transmitting one channel-encoded data packet, and serve as the unit of processing in, for example, scheduling, link adaptation, retransmission control (HARQ (Hybrid Automatic Repeat reQuest)) and so on.

Also, in existing LTE systems (for example, LTE Rel. 8 to 13), a user terminal transmits uplink control information (UCI) by using an uplink control channel (for example, a PUCCH (Physical Uplink Control CHannel)) or an uplink data channel (for example, a PUSCH (Physical Uplink Shared CHannel)). The format of this uplink control channel is referred to as "PUCCH format (PF (PUCCH Format))" and/or the like.

Non-Patent Literature 2 relates to structures of long PUCCH with up to 2 bits and proposes, for NR long PUCCH with up to 2 bits, if enabled, the frequency hopping boundary should locate around the middle of N-symbol long PUCCH: when N is even, the end of first frequency-hop is at symbol (N/2-1 ); when N is odd, the end of first frequency-hop is at symbol ((N-1 )/2-1); note: the starting symbol index is from 0.

Non-Patent Literature 3 describes long-PUCCH for UCI of up to 2 bits. It is proposed that, for N symbols long PUCCH or UCI of up to 2 bits, frequency hopping is occurred after ceil (N/2) symbols if the starting symbol is even floor (N/2) symbols if the starting symbol is odd.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010
Non-Patent Literature 2: HUAWEI ET AL, "Long PUCCH for UCI of up to 2 bits", 3GPP DRAFT, R1-1719394, 3RD GENERATION PARTNERSHIP PROJECT (3GPP), vol. RAN WG1, no. Reno, USA; 18 November 2017
Non-Patent Literature 3: NTT DOCOMO et al.: "Long-PUCCH for UCI of up to 2 bits", 3GPP Draft; R1-1720816

### Summary of Invention

### Technical Problem

Envisaging future radio communication systems (for example, LTE Rel. 14, 15 and later versions, 5G, NR, etc.), a study is underway to support a first uplink control channel (also referred to as a "short PUCCH," "PUCCH format 0 or 2," etc.) of a relatively short duration (for example one to two symbols), and a second uplink control channel (also referred to as a "long PUCCH," "PUCCH format 1, 3 or 4," etc.) of a duration longer (for example, four to fourteen symbols) than the first uplink control channel.

Also, in such future radio communication systems, uplink control channels (for example, long PUCCHs) that are for a number of user terminals and that have different durations and/or starting symbols may be multiplexed in the same slot. However, when frequency hopping is applied to a number of uplink control channels, the hopping timings (hopping boundaries, hopping patterns, etc.) of these uplink control channels all vary, and, as a result of this, there are more radio resources (for example, time and/or frequency resources) that are not allocated to any user terminal, and therefore the efficiency of the use of radio resources might decline.

The present invention has been made in view of the above, and it is therefore an object of the present invention to provide a user terminal and a radio communication method, whereby the efficiency of the use of radio resources can be improved when uplink control channels that are for a number of user terminals and that have different durations and/or starting symbols are multiplexed in the same slot.

### Solution to Problem

The object of the invention is achieved by the subject-matter of the independent claims. Advantageous embodiments are defined in the dependent claims. Further examples are provided for facilitating the understanding of the invention. According to one aspect, a user terminal has a transmitting section that transmits uplink control information (UCI) by using an uplink control channel, and a control section that controls a frequency resource for mapping the uplink control channel to use to transmit the UCI by using a single table that defines hopping timings for each duration of the uplink control channel.

### Advantageous Effects of Invention

According to the present invention, the efficiency of the use of radio resources can be improved when uplink control channels that are for a number of user terminals and that have different durations and/or starting symbols are multiplexed in the same slot.

### Brief Description of Drawings

FIGs. 1A and 1B are diagrams, each showing an example of an uplink control channel format in a future radio communication system;
FIG. 2 is a diagram to show examples of PUCCH formats in a future radio communication system;
FIG. 3 is a diagram to show examples of OCC multiplexing capacities for each long-PUCCH duration;
FIGs. 4A to 4D are diagrams to show examples of long-PUCCH durations and long-PUCCH starting symbols;
FIG. 5 is a diagram to show an example in which a number of long PUCCHs have the same starting symbol and different long-PUCCH durations;
FIG. 6 is a diagram to show an example of a table for use for determining hopping timings, according to a first aspect;
FIG. 7 is a diagram to show examples of hopping timings for each long-PUCCH duration, according to the first aspect;
FIG. 8 is a diagram to show an example of a case in which hopping timings for a number of long PUCCHs having the same starting symbol and different durations are not matched;
FIG. 9 is a diagram to show an example of a case in which hopping timings for a number of long PUCCHs having the same starting symbol and different durations are matched;
FIG. 10 is a diagram to show an example of a table for use for determining hopping timings, according to a first variation of the first aspect;
FIG. 11 is a diagram to show another example of a table for use for determining hopping timings, according to a second variation of the first aspect;
FIG. 12 is a diagram to show an example of a table for use for determining hopping timings, according to a second aspect;
FIG. 13 is a diagram to show another example of a table for use for determining hopping timings, according to the second aspect;
FIG. 14 is a diagram to show an example of a table for use for determining hopping timings, according to a third aspect;
FIGs. 15A and 15B are diagrams that each show an example of a case in which hopping timings for a number of long PUCCHs having the same starting symbol and durations that are different by up to three symbols are matched;
FIGs. 16A and 16B are diagrams that each show an example of a table for use for determining hopping timings, according to other aspects;
FIG. 17 is a diagram to show an example of a schematic structure of a radio communication system according to the present embodiment;
FIG. 18 is a diagram to show an example of an overall structure of a radio base station according to the present embodiment;
FIG. 19 is a diagram to show an example of a functional structure of a radio base station according to the present embodiment;
FIG. 20 is a diagram to show an example of an overall structure of a user terminal according to the present embodiment;
FIG. 21 is a diagram to show an example of a functional structure of a user terminal according to the present embodiment; and
FIG. 22 is a diagram to show an example of a hardware structure of a radio base station and a user terminal according to the present embodiment.

### Description of Embodiments

In existing LTE systems (LTE Rel. 13 or earlier versions), uplink control channels (for example, PUCCH) to use a number of formats (for example, LTE PUCCH formats (LTE PFs) 1 to 5) of the same duration (for example, fourteen symbols when normal cyclic prefix (CP) is used) are supported.

Envisaging future radio communication systems (for example, LTE Rel. 15 and later versions, 5G, NR, etc.), a study is underway to transmit UCI by using uplink control channels (for example, PUCCH) of a number of formats (for example, NR PUCCH formats (NR PFs), which are also referred to simply as "PUCCH formats") that vary at least in duration.

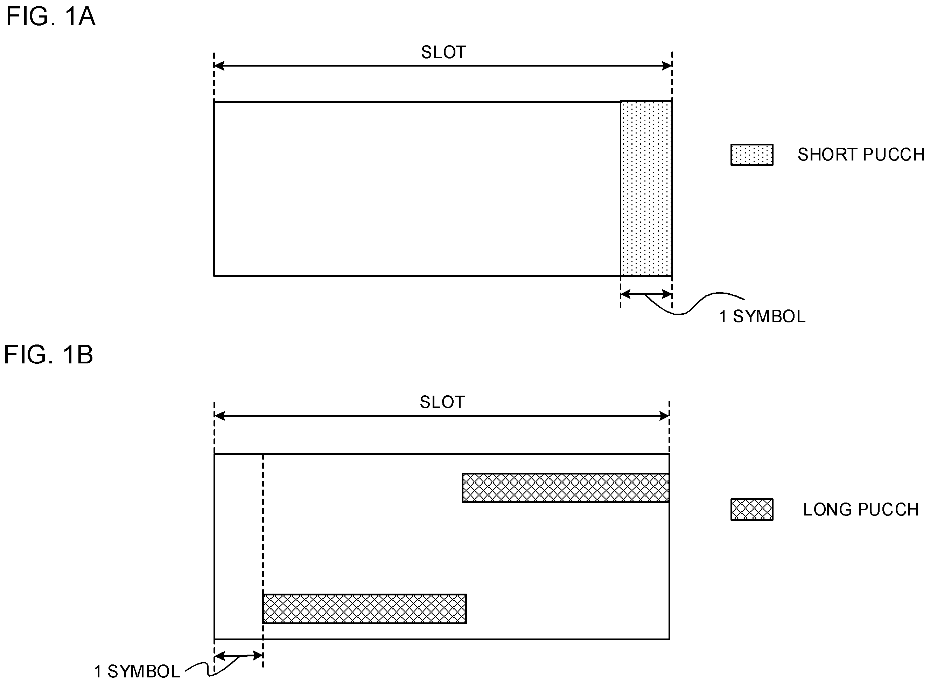

FIGs. 1 are diagrams to show examples of PUCCHs in a future radio communication system. FIG. 1A shows a PUCCH (a short PUCCH or a first uplink control channel) that is comprised of a relatively small number of symbols (for example, a duration of one to two symbols). FIG. 1B shows a PUCCH (a long PUCCH or a second uplink control channel) that is comprised of a larger number of symbols than a short PUCCH (for example, a duration of four to fourteen symbols).

As shown in FIG. 1A, a short PUCCH may be arranged in a given number of symbols (for example, one to two symbols) from the end of a slot. Note that the symbols for arranging a short PUCCH are not limited to the end of a slot, and may be a given number of symbols at the top or in the middle of a slot. Also, a short PUCCH is arranged in one or more frequency resources (for example, one or more PRBs). Note that, although the short PUCCH of FIG. 1A is placed in contiguous PRBs, the short PUCCH may be arranged in non-contiguous PRBs as well.

Furthermore, a short PUCCH may be time-division-multiplexed and/or frequency-division-multiplexed with an uplink data channel (hereinafter also referred to as a "PUSCH") in a slot. Also, a short PUCCH may be time-division-multiplexed and/or frequency-division-multiplexed with a downlink data channel (hereinafter also referred to as a "PDSCH") and/or a downlink control channel (hereinafter also referred to as a "PDCCH (Physical Downlink Control CHannel)") in a slot.

For a short PUCCH, a multi-carrier waveform (for example, the OFDM (Orthogonal Frequency Division Multiplexing) waveform) may be used, or a single-carrier waveform (for example, the DFT-s-OFDM (Discrete Fourier Transform-Spread-Orthogonal Frequency Division Multiplexing) waveform) may be used.

On the other hand, as shown in FIG. 1B, a long PUCCH is arranged over a larger number of symbols (for example, four to fourteen symbols) than a short PUCCH. Referring to FIG. 1B, this long PUCCH is not arranged in a given number of symbols at the top of the slot, but may be arranged in a given number of symbols at the top.

As shown in FIG. 1B, a long PUCCH may be comprised of fewer frequency resources (for example, one or two PRBs) than a short PUCCH in order to achieve a power boosting effect, or may be comprised of a number of frequency resources to match a short PUCCH.

Also, a long PUCCH may be frequency-division-multiplexed with a PUSCH in a slot. In addition, a long PUCCH may be time-division-multiplexed with a PDCCH in a slot. Also, a long PUCCH may be arranged with a short PUCCH in the same slot. For a long PUCCH, a single-carrier waveform (for example, the DFT-s-OFDM waveform) may be used, or a multi-carrier waveform (for example, the OFDM waveform) may be used.

Also, as shown in FIG. 1B, frequency hopping, in which the frequency resource hops at a given timing within a slot may be applied to a long PUCCH. The timing at which the frequency resource hops in a long PUCCH may be referred to as the "hopping boundary," the "hopping timing," the "hopping pattern," and so on.

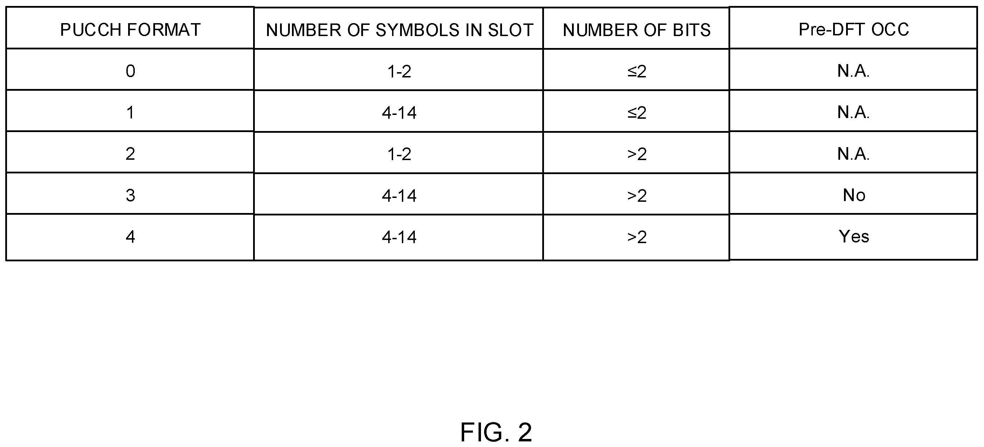

FIG. 2 is a diagram to show examples of PUCCH formats in a future radio communication system. FIG. 2 shows a number of PUCCH formats (NR PUCCH formats) with varying numbers of symbols and/or varying numbers of UCI bits. Note that the PUCCH formats shown in FIG. 2 are simply examples, and the contents and the index numbers of PUCCH formats 0 to 4 are not limited to those shown in FIG. 2.

For example, in FIG. 2, PUCCH format 0 is a short PUCCH for UCI of up to two bits (see, for example, FIG. 1A), and is also referred to as a "sequence-based short PUCCH" and so on. This short PUCCH conveys UCI of up to two bits (for example, an HARQ-ACK and/or a scheduling request (SR)) by using one or two symbols.

PUCCH format 1 is a long PUCCH for UCI of up to two bits (see, for example, FIG. 1B). This long PUCCH conveys UCI of up to two bits in four to fourteen symbols. In PUCCH format 1, a number of user terminals may be code-division-multiplexed (CDM) in the same PRB by using, for example, time-domain block-wise spreading, which uses cyclic shifts (CSs) and/or orthogonal spreading codes (OCCs (Orthogonal Cover Codes)).

PUCCH format 2 is a short PUCCH for UCI of more than two bits (see, for example, FIG. 1A). This short PUCCH conveys UCI of more than two bits in one or two symbols.

PUCCH format 3 is a long PUCCH for UCI of more than two bits (see, for example, FIG. 1B), and a number of user terminals may be multiplexed within the same PRB. This long PUCCH conveys UCI of more than two bits in four to fourteen symbols. In PUCCH format 3, a number of user terminals may be code-division-multiplexed in the same PRB by time-domain block-wise spreading, which uses CSs and/or OCCs. Alternatively, a number of user terminals may be multiplexed using at least one of (frequency-domain) block-wise spreading before the discrete Fourier transform (DFT), frequency division multiplexing (FDM), and comb-tooth-shaped subcarriers (combs). Also, OCCs before DFT spreading need not be applied to PUCCH format 3.

PUCCH format 4 is a long PUCCH for UCI of more than two bits (see, for example, FIG. 1B), and a single user terminal is multiplexed in the same PRB. This long PUCCH conveys UCI that is larger than two bits. PUCCH format 4 is different from PUCCH format 3 in that a number of user terminals are not multiplexed in the same PRB. Also, OCCs may be applied to PUCCH format 4 prior to DFT spreading.

Note that FIG. 2 is just an example, and the long PUCCH formats may be controlled based on the number N of bits of UCI. For example, PUCCH format 3 may be used for UCI of more than N bits (or N bits or more), and PUCCH format 4 may be used for UCI of up to N bits (or less than N bits) and more than two bits. N may be equal to two, or may be greater than two. Also, different values of N may be used between PUCCH formats 3 and 4. For example, N=2 may be used for PUCCH format 3, and N=100 may be used for PUCCH format 4.

Also, in future radio communication systems (for example, LTE Rel. 15 and later versions, 5G, NR, etc.), the number of user terminals to be multiplexed by using OCCs is determined depending on the duration of a long PUCCH (long-PUCCH duration) (for example, PF 1 for conveying UCI of up to two bits). The number of user terminals to be multiplexed using OCCs may be paraphrased as "OCC multiplexing capacity," "OCC length," "spreading factor (SF)" and so on.

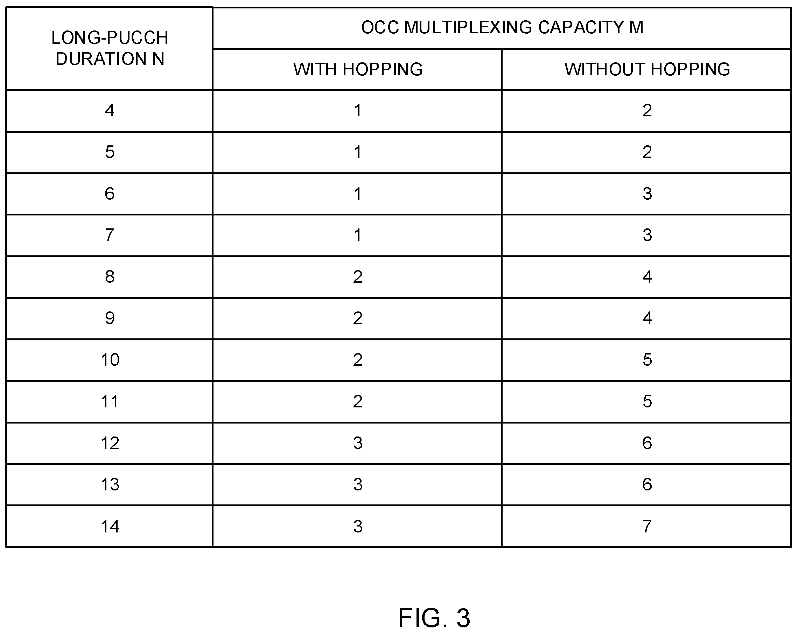

FIG. 3 is a diagram to show examples of OCC multiplexing capacities for each long-PUCCH duration. As shown in FIG. 3, the OCC multiplexing capacity M for each long-PUCCH duration may be assigned a different value depending on whether or not frequency hopping is applied in this long-PUCCH duration. For example, in FIG. 3, when the long-PUCCH duration N is fourteen symbols, the OCC multiplexing capacity is three if frequency hopping is applied, and the OCC multiplexing capacity is seven if frequency hopping is not applied.

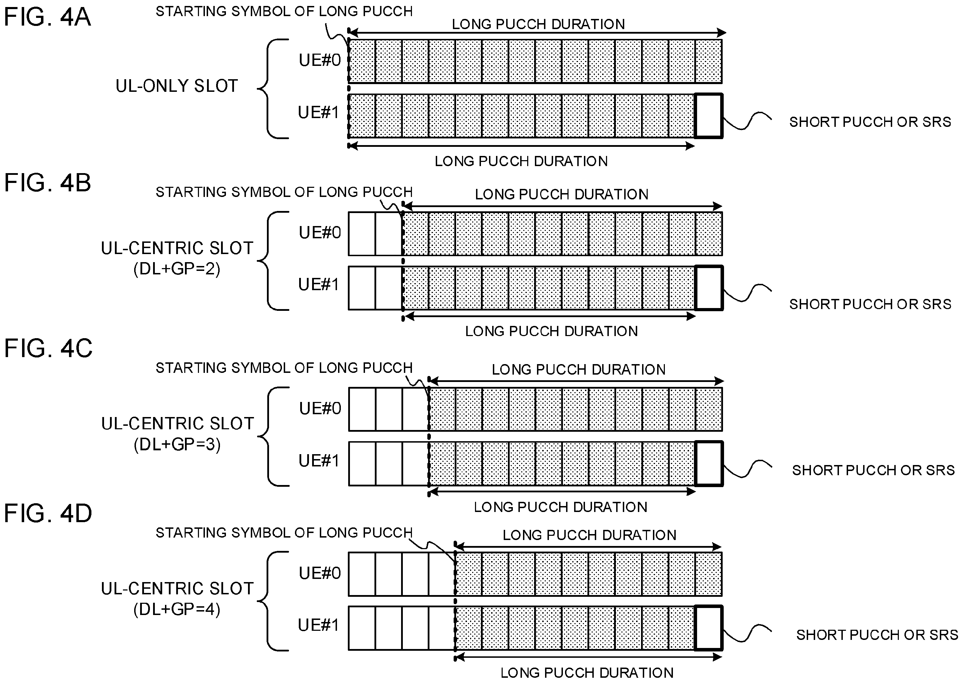

In the above future radio communication system, it is assumed that the long-PUCCH duration and the long-PUCCH starting position (starting symbol) vary per user terminal. FIGs. 4 are diagrams to show examples of long-PUCCH durations and long-PUCCH starting symbols.

As shown in FIGs. 4A to 4D, the long-PUCCH duration may be different depending on the type of slot (for example, a slot that includes only UL symbols (UL-only slot), or a slot that includes DL symbols and UL symbols but includes a larger number of UL symbols than DL symbols (UL-centric slot)). In a UL-centric slot, a symbol for switching between a DL symbol and a UL symbol (guard period (GP)) may be provided.

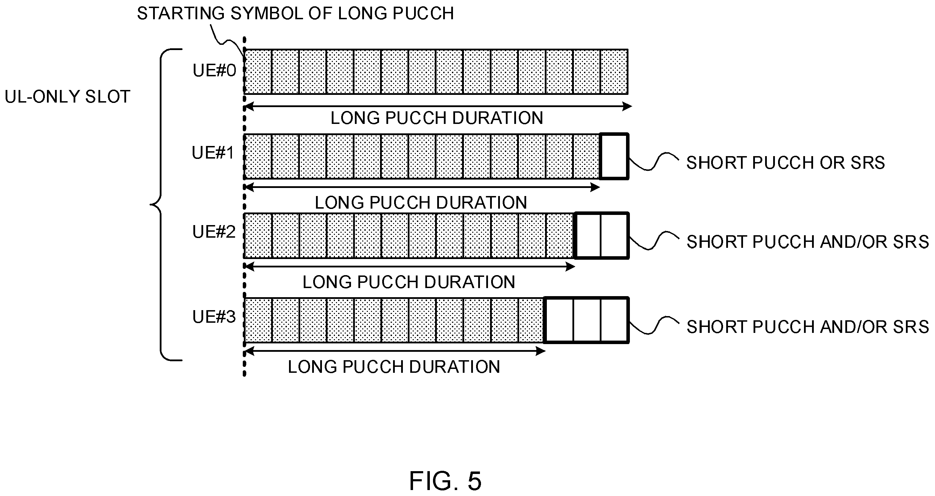

Also, as shown in FIGs. 4A to 4D and FIG. 5, the long-PUCCH duration may be shortened depending on whether or not a short PUCCH and/or a sounding reference signal (SRS (Sounding Reference Signal)) are present. The duration of a short PUCCH (short PUCCH duration) may be, for example, one or two symbols. Also, the duration in which the SRS is arranged may be, for example, one, two, or four contiguous symbols.

Furthermore, the long-PUCCH duration may be reported from the network (for example, radio base station) for each user terminal (UE-specific) (or long-PUCCH durations of different lengths may be reported per UE). As for the method of reporting long-PUCCH durations, long-PUCCH durations may be reported in a higher layer and/or the physical layer, or a number of candidates may be reported in the higher layer and selections may be made from among the candidates in the physical layer.

In this way, when frequency hopping is applied to a number of long PUCCHs having different durations and/or starting symbols, it is assumed that, the hopping timing (hopping boundary, hopping pattern) of each of these long PUCCHs is determined by the user terminal itself based on the duration and/or the starting position of each long PUCCH.

However, when a number of user terminals to use a number of long PUCCHs having different durations and/or starting symbols are multiplexed in the same slot, the hopping timing varies between these long PUCCHs, so that there are more radio resources (for example, time resources and/or frequency resources) that are not allocated to any user terminal, and therefore the efficiency of the use of radio resources might decline.

So, the present inventors have come up with the idea of improving the efficiency of the use of radio resources by matching the hopping timing between a number of long PUCCHs having the same starting symbol and having durations with differences of given numbers of symbols. Also, the present inventors have focused on the fact that determining hopping timings by using a different tables depending on whether the starting symbol of the long-PUCCH duration corresponds to an even number or an odd number might increase the processing load (or the test load) on the user terminal, and come up with the idea of determining long-PUCCH hopping timings using a single table.

Now, the present embodiment will be described below in detail. In the following description, "long PUCCH" will be mainly described, but the present embodiment can be suitably applied to a short PUCCH to which frequency hopping is applied. Furthermore, although the following description will assume cases in which the slot indices start from #0 in a slot of fourteen symbols, this is by no means limiting.

### (First Aspect)

According to a first aspect, a user terminal uses a single table that defines hopping timings (hopping boundaries, hopping patterns, etc.) for each long PUCCH (uplink control channel) duration (long-PUCCH duration N), to control the frequency resources for mapping the long PUCCH for use for transmitting UCI.

To be more specific, in this single table, long-PUCCH durations, information to show the long-PUCCH hopping timings for when the index of the starting symbol of the long-PUCCH duration corresponds to an even number (first hopping timing information), and information to show the long-PUCCH hopping timings for when the starting symbol's index corresponds to an odd number (second hopping timing information) may be associated with each other.

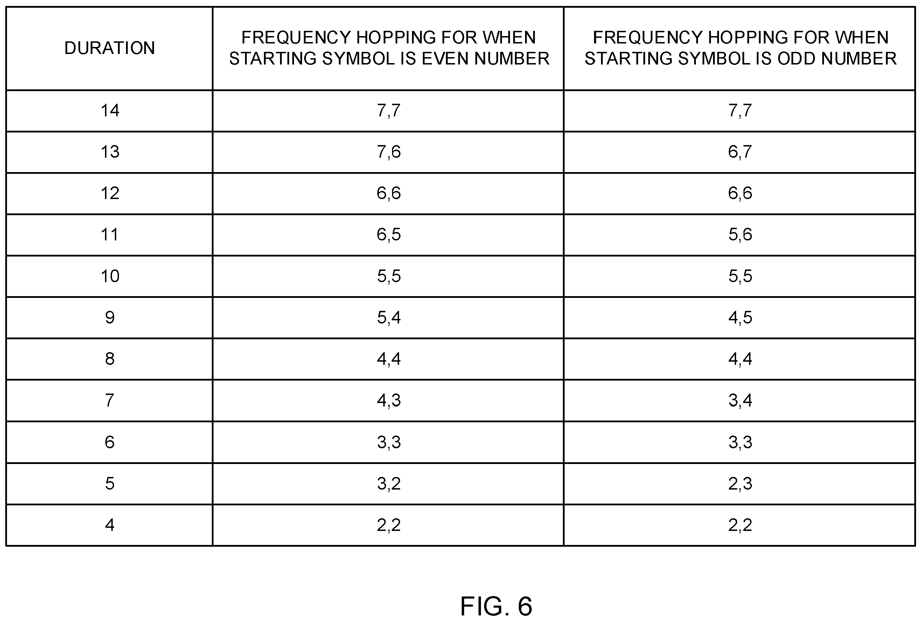

FIG. 6 is a diagram to show an example of a table for use for determining hopping timings, according to a first aspect. In the table shown in FIG. 6, at least long-PUCCH durations, the first hopping timing information and the second hopping timing information are associated with each other.

For example, in the table shown in FIG. 6, the numbers of symbols (a, b) before and after the hop in a long-PUCCH duration are associated with the long-PUCCH duration as the first and second hopping timing information.

In the table shown in FIG. 6, information to show OCC multiplexing capacities (OCCs) may be associated, in addition to long-PUCCH durations and the first and second hopping timing information. Alternatively, in the table shown in FIG. 6, information to show OCCs needs not be associated.

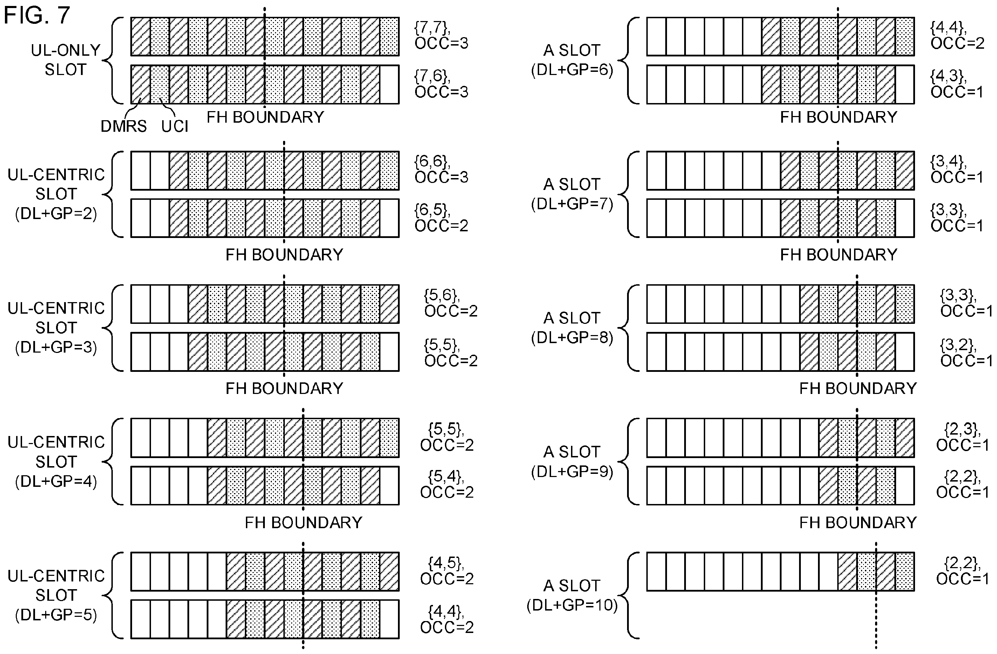

FIG. 7 is a diagram to show examples of hopping timings for each long-PUCCH duration, according to the first aspect. In FIG. 7, hopping timings (hopping boundaries, FH boundaries, etc.) that are determined using the table shown in FIG. 6 are shown for each PUCCH duration N.

Note that, although examples will be described below with reference to FIG. 7 in which symbols for UCI (UCI symbol) and symbols for the demodulation reference signal (DMRS) (DMRS symbol) for this UCI are provided alternately in each long-PUCCH duration, the DMRS symbol allocation patterns shown in FIG. 7 are by no means limiting. In addition, the "A slots" in FIG. 7 may be referred to as "UL-centric slots" or "DL-centric slots."

For example, in FIG. 7, when the long PUCCH starts at symbol #2 and the long-PUCCH duration N is eleven symbols, the numbers of symbols before and after the hop are determined to be (a, b)=(6, 5) based on the table shown in FIG. 6. That is, the hopping timing is determined to be between the sixth symbol and the seventh symbol of the long PUCCH.

Also, in FIG. 7, when the long PUCCH starts at symbol #3 and the long-PUCCH duration N is eleven symbols, the numbers of symbols before and after the hop are determined to be (a, b)=(5, 6) based on the table shown in FIG. 6. That is, the hopping timing is determined to be between the fifth symbol and the sixth symbol of the long PUCCH.

Similarly, if the long PUCCH starts at another symbol in the slot, the numbers of symbols before and after the hop (that is, the hopping boundary) depending on the long-PUCCH duration N are determined using the table shown in FIG. 6.

In FIG. 7, the hopping timing matches between a number of long PUCCHs having the same starting-symbol index and having durations that are different by one symbol (for example, a long PUCCH of fourteen symbols and a long PUCCH of thirteen symbols). Furthermore, the hopping timings shown in FIG. 7 fulfill OCC multiplexing capacities for each long-PUCCH duration (for example, ones for the case "WITH FREQUENCY HOPPING" in FIG. 3), so that, even when frequency hopping is applied, a given number of user terminals (for example, in FIG. 3, three user terminals in the case of the long PUCCH of fourteen symbols) can be multiplexed on the same long PUCCH.

As described above, according to the first aspect, at least the hopping timings for a number of long PUCCHs having the same starting symbol index and having durations with differences of given numbers of symbols (for example, one symbol) can be matched, so that the efficiency of the use of radio resources can be improved.

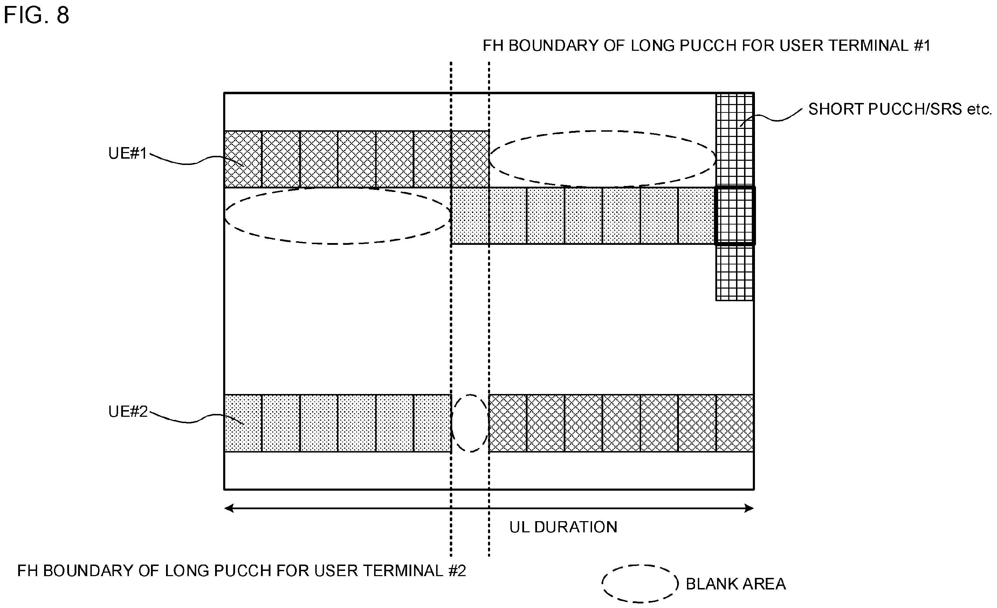

For example, as shown in FIG. 8, even when the long PUCCHs for user terminals #1 and #2 both start at the same symbol #0, the long-PUCCH duration of user terminal #2 is shorter than the long PUCCH of user terminal #1 by a given number of symbols (for example, by one symbol in FIG. 8), and, as a result of this, when the hopping timing varies between user terminals #1 and #2, there is a possibility that radio resources (blank areas) that are not allocated to any of the user terminals might be produced.

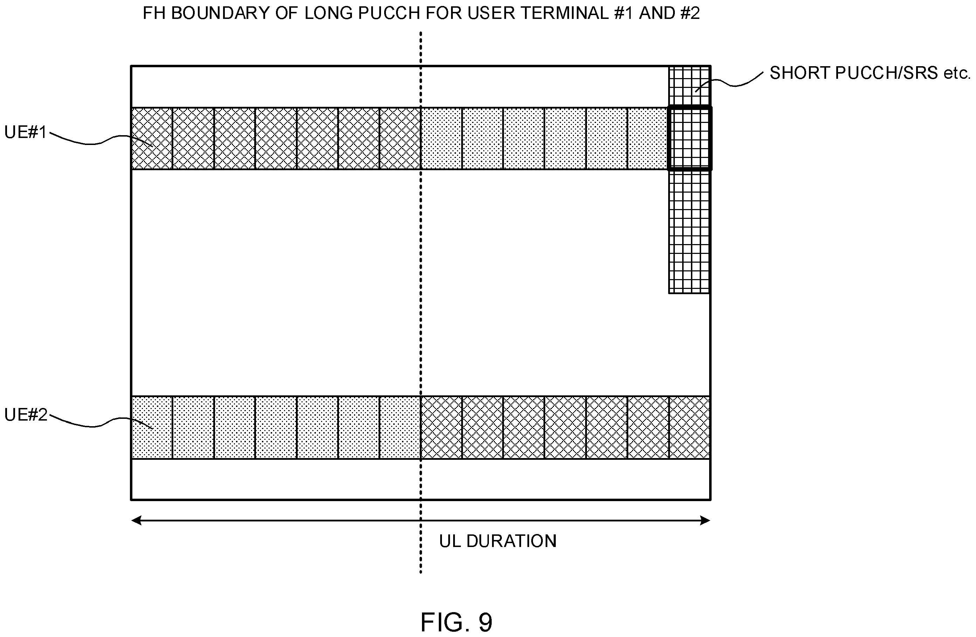

On the other hand, as shown in FIG. 9, when the long PUCCHs for user terminals #1 and #2 both start at the same symbol #0, the hopping timing matches between user terminals #1 and #2 even if the long-PUCCH duration of user terminal #2 is shorter than the long PUCCH of user terminal #1 by a given number of symbols (for example, by one symbol in FIG. 9), so that blank periods can be prevented from being produced. As a result of this, the efficiency of the use of radio resources can be improved.

In this way, according to the first aspect, a single table is used that defines both the hopping timings for use when the long-PUCCH starting symbol corresponds to even numbers and the hopping timings for use when the long-PUCCH starting symbol corresponds to odd numbers. Consequently, the size of the table for use for determining hopping timings (hopping boundaries) can be made smaller (the types of hopping boundaries can be reduced), so that the processing load (or the test load) on the user terminals can be reduced.

### <First Variation>

In the table shown in FIG. 6, (7, 7) is associated with the long-PUCCH duration of fourteen symbols as information to show the hopping timing for when the starting symbol corresponds to an odd number (second hopping timing information).

Meanwhile, if one slot is comprised of fourteen symbols, the case in which the long-PUCCH duration is fourteen symbols and the starting symbol corresponds to an odd number is not assumed. So, with the first variation, unexpected combinations of long-PUCCH durations and starting symbols need not be associated with the information to show the hopping timing (for example, the above (a, b)) in the above single table.

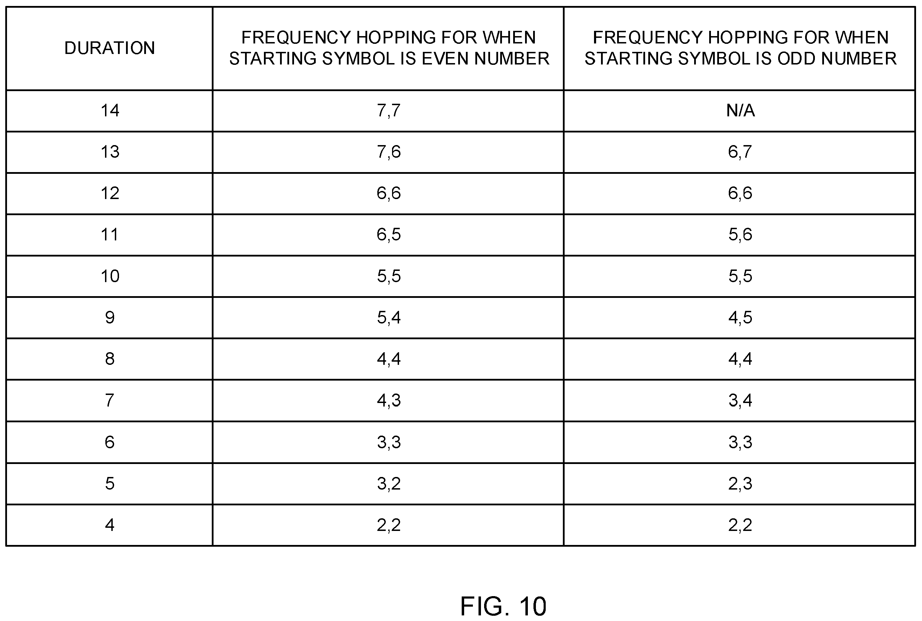

FIG. 10 is a diagram to show an example of the table according to the first variation of the first aspect. If one slot is comprised of fourteen symbols, the case in which the long-PUCCH duration is fourteen symbols and the starting symbol corresponds to an odd number is not assumed. Therefore, as shown in FIG. 10, the long-PUCCH duration of fourteen symbols may be associated with "N/A" (Not Applicable).

According to the first variation, N/A is set to unexpected combinations of long-PUCCH durations and starting symbols in the above single table, so that it is possible to avoid executing unnecessary test steps.

### <Second Variation>

In a specific long-PUCCH duration, the hopping timing for when the starting symbol corresponds to an odd number and the hopping timing (hopping boundary) for when the starting symbol corresponds to an odd number may be the same. For example, in FIG. 6, where the long-PUCCH duration is 14, 12, 10, 8, 6, or 4 symbols (even numbers of symbols), the first hopping timing information to show the hopping timing for when the starting symbol corresponds to an odd number and the second hopping timing information to show the hopping timing for when the starting symbol corresponds to an odd number have the same value.

So, with the second variation, if the hopping timing for when the starting symbol corresponds to an even number and the hopping timing for when the starting symbol corresponds to an odd number are the same, information to show a common hopping timing (common hopping timing information) may be used.

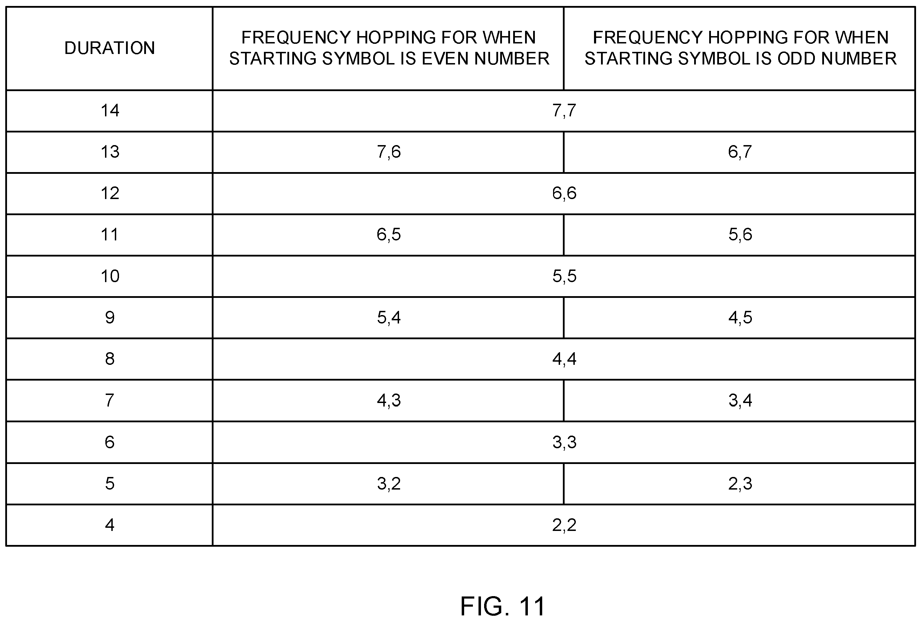

FIG. 11 is a diagram to show an example of the table according to a second variation of the first aspect. In the table shown in FIG. 11, specific long-PUCCH durations are associated with information (common hopping timing information) to show hopping timings that apply in common to the case in which the starting symbol index corresponds to an even number and the case in which the starting symbol index corresponds to an even number.

For example, in the table shown in FIG. 11, when the long-PUCCH durations comprise of even numbers of symbols (for example, 14, 12, 10, 8, 6, or 4 symbols), these long-PUCCH durations are associated with the numbers of symbols before and after the hop (a, b=(7, 7), (6, 6), (5, 5), (4, 4), (3, 3), (2, 2)) as common hopping timing information for the case in which the starting symbol index corresponds to an even number and the case in which the starting symbol index corresponds to an odd number.

Also, in the table shown in FIG. 11, when the long-PUCCH durations comprise of odd numbers of symbols (for example, 13, 11, 9, 7, or 5 symbols), these long-PUCCH durations may be associated with the first hopping timing information for the case in which the starting symbol index corresponds to an even number and the second hopping timing information for the case in which the starting symbol index corresponds to an odd number.

According to the second variation, for the specific long-PUCCH duration in the above single table, there is no need to control the hopping boundary depending on whether the starting symbol corresponds to an even number or an odd number (so as to reduce the branches), so that the processing load (or the test load) on the user terminal can be reduced.

### (Second Aspect)

With a second aspect, a variation of changing the values in the tables that have been described with the first aspect and the first and second variations will be described. When using the tables shown in FIG. 6, FIG. 10 and FIG. 11, there is a possibility that the ratio of UCI symbols and DMRS symbols that are mapped to the same frequency resource in a long PUCCH of a specific duration does not fulfill a given threshold (for example, 50%), and the characteristics of this long PUCCH of the specific duration might deteriorate.

So, according to the second aspect, in the above single table, the hopping timings for uplink control channels of specific durations are defined based on the ratio of UCI and the demodulation reference signal that are mapped to the same frequency resource.

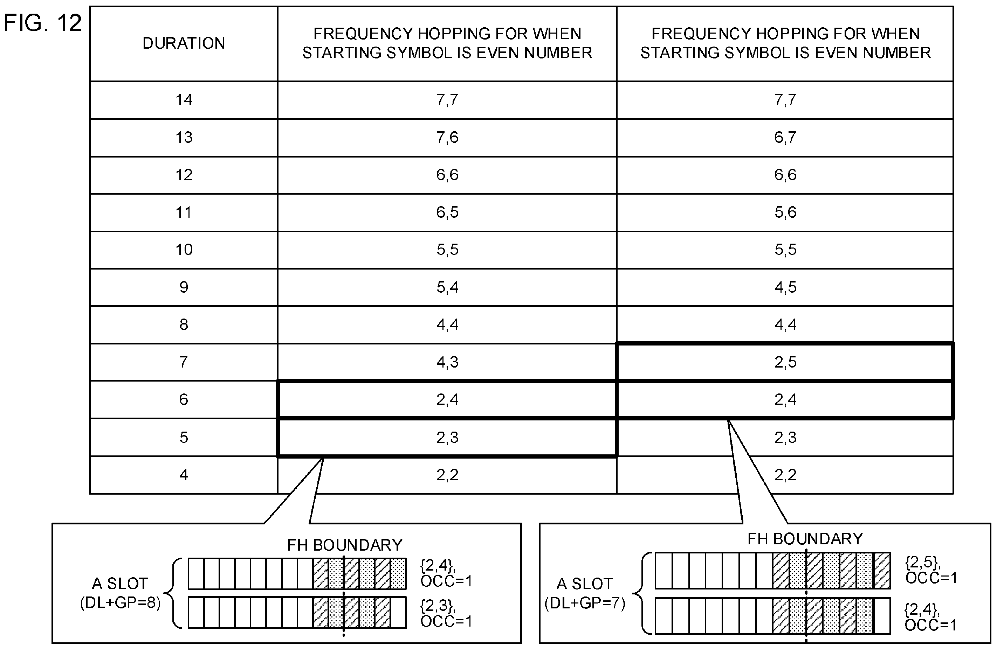

FIG. 12 is a diagram to show a table for use for determining hopping boundaries, according to the claimed invention. In the table shown in FIG. 12, the numbers of symbols before and after the hop (a, b), associated with specific long-PUCCH durations as the above-described first hopping timing information and/or second hopping timing information, are set to different values from those of the table shown in FIG. 6.

For example, the numbers of symbols (a, b) before and after the hop, associated with the long-PUCCH duration of six symbols as the first hopping timing information for when the starting symbol corresponds to even numbers, are (3, 2) in the table of FIG. 6, but are (2, 3) in the table of FIG. 12. Also, the numbers of symbols (a, b) before and after the hop, associated with the long-PUCCH duration of five symbols, are (3, 2) in the table of FIG. 6, but are (2, 3) in the table of FIG. 12.

When the numbers of symbols (a, b) before and after the hop associated with the long-PUCCH duration of six symbols as the first hopping timing information are (3, 3), the ratio of UCI symbols and DMRS symbols after the hop falls below 50% (see the case of DL+GP=8 in FIG. 7). On the other hand, when these numbers of the symbols (a, b) are (2, 4), the ratio of UCI symbols and DMRS symbols after the hop is 50%, as shown in FIG. 12.

Likewise, the numbers of symbols (a, b) before and after the hop, associated with the long-PUCCH duration of seven symbols as the second hopping timing information for when the starting symbol corresponds to odd numbers, are (3, 4) in the table of FIG. 6, but are (2, 5) in the table of FIG. 12. Also, the numbers of symbols (a, b) before and after the hop, associated with the long-PUCCH duration of six symbols, are (3, 3) in the table of FIG. 6, but are (2, 4) in the table of FIG. 12.

When the numbers of symbols (a, b) before and after the hop associated with the long-PUCCH duration of six symbols as the second hopping timing information are (3, 3), the ratio of UCI symbols and DMRS symbols after the hop falls below 50% (see the case of DL+GP=7 in FIG. 7). On the other hand, when these numbers of the symbols (a, b) are (2, 4), the ratio of UCI symbols and DMRS symbols after the hop is 50%, as shown in FIG. 12.

According to the table shown in FIG. 12, even when the hopping timings for a number of long PUCCHs having the same starting symbol and having long-PUCCH durations with differences of given numbers of symbols are matched, the ratio of UCI symbols and DMRS symbols mapped to the same frequency resource in specific long-PUCCH durations fulfills a given threshold (for example, 50%), so that the characteristics of long PUCCHs in the specific long-PUCCH durations can be improved.

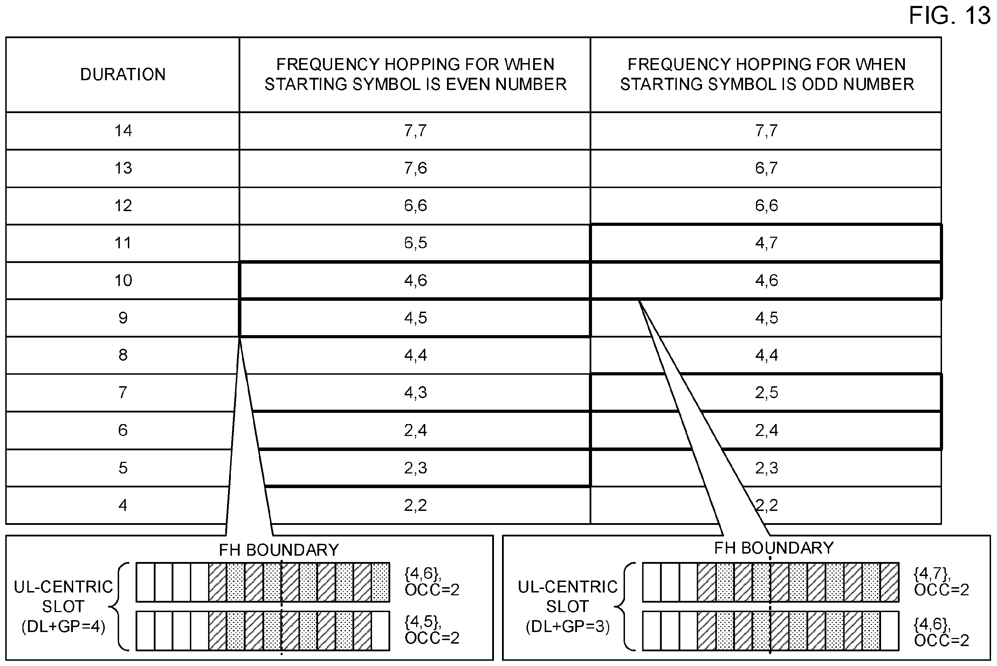

FIG. 13 is a diagram to show yet another example of the table for use for determining hopping boundaries, according to the second aspect. In the table shown in FIG. 13, the numbers of symbols (a, b) before and after the hop, associated with specific long-PUCCH durations as the above-described first hopping timing information and/or second hopping timing information, are set to different values from those of the table shown in FIG. 6.

In the table shown in FIG. 13, the numbers of symbols (a, b) before and after the hop, associated with specific long-PUCCH durations (here, ten and nine symbols, in addition to six and five symbols in FIG. 12) as the first hopping timing information, are set to different values from those corresponding to even numbers in the table shown in FIG. 6.

Also, in the table shown in FIG. 13, the numbers of symbols (a, b) before and after the hop, associated with specific long-PUCCH durations (here, eleven and ten symbols, in addition to seven and six symbols in FIG. 12) as the second hopping timing information, are set to different values from those corresponding to odd numbers in the table shown in FIG. 6.

According to the table shown in FIG. 13, the ratio of UCI symbols and DMRS symbols mapped to the same frequency resource fulfills a given threshold (for example, 50%) in more long-PUCCH durations than in FIG. 12, so that the characteristics of long PUCCHs can be improved in more long-PUCCH durations.

Note that in the tables shown in FIG. 12 and FIG. 13, not all of the values changed from those of FIG. 6 may be applied, and the numbers of symbols before and after the hop associated with at least one long-PUCCH duration as the first hopping timing information and/or the second hopping timing information may be changed. For example, in FIG. 12, only the first hopping timing information for when the starting symbol corresponds to even numbers (or only the second hopping timing information for when the starting symbol corresponds to even numbers) may be changed.

Furthermore, FIG. 12 and FIG. 13 show values that are changed from those of the table shown in FIG. 6, but, as has been described above with the first variation, the same changes may be applied to the table shown in FIG. 10. That is, in FIG. 12 and FIG. 13, "N/A" may be associated with the long-PUCCH duration of fourteen symbols, instead of the second hopping timing information.

Furthermore, FIG. 12 and FIG. 13 show values that are changed from those of the table shown in FIG. 6, but, as has been described above with the second variation, the same changes may be applied to the table shown in FIG. 11. When the changes are applied to the table shown in FIG. 11, the long-PUCCH durations, in which a common hopping timing is applied to the case the starting symbol corresponds to an even number and the case the starting symbol corresponds to an odd number, may be different than FIG. 11.

As described above, according to the second aspect, in at least one long-PUCCH duration defined in the above-described single table, the ratio of UCI symbols and DMRS symbols to be mapped to the same frequency resource fulfills a given threshold, and the hopping timings for a number of long PUCCHs that at least have the same starting symbol are matched. Consequently, the characteristics of long PUCCH in specific long-PUCCH durations can be improved while also improving the efficiency of the use of radio resources.

### (Third Aspect)

According to a third aspect of the present invention, a variation of changing the values in the tables that have been described with at least one of the first and second aspects and the first and second variations will be described. As has been described with reference to FIG. 5, it is assumed that a short PUCCH and/or an SRS are arranged in up to three symbols at the end of a slot. In the tables shown in FIG. 6 and FIG. 10 to FIG. 13, even if the index of the starting symbol is the same, there is still a possibility that the hopping timings for a number of long PUCCHs having long-PUCCH durations that are different by up to three symbols are not matched.

So, according to the third aspect, when the index of the starting symbol is the same, the first hopping timing information and/or the second hopping timing information for each long-PUCCH duration (that is, the numbers of symbols (a, b) before and after the hop for when the starting symbol corresponds to even numbers and/or odd numbers) in the above-described single table are defined so that, the hopping timings for a number of long PUCCHs match, even when the long-PUCCH durations are different by up to three symbols.

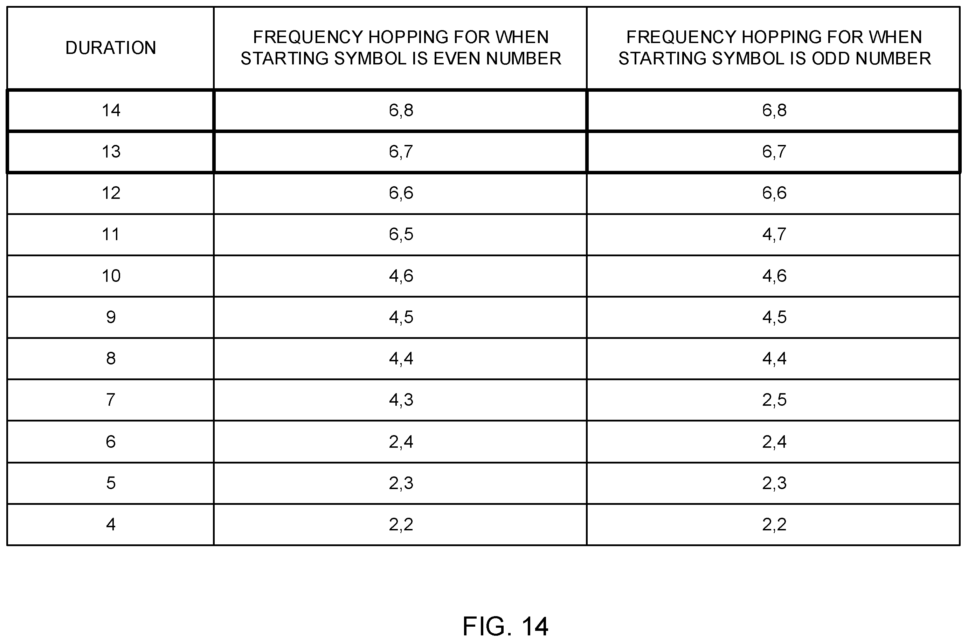

FIG. 14 is a diagram to show an example of a table for use for determining hopping timings, according to the third aspect. In the table shown in FIG. 14, the numbers of symbols (a, b) before and after the hop, associated with the long-PUCCH durations of fourteen symbols and thirteen symbols, are configured to different values from, for example, those of FIG. 6 and so on. For example, the numbers of symbols (a, b) before and after the hop, associated with the long-PUCCH durations of fourteen symbols and thirteen symbols, are, for example, (7, 7) and (7, 6) in FIG. 6, but are defined as (6, 8) and (6, 7) in FIG. 14.

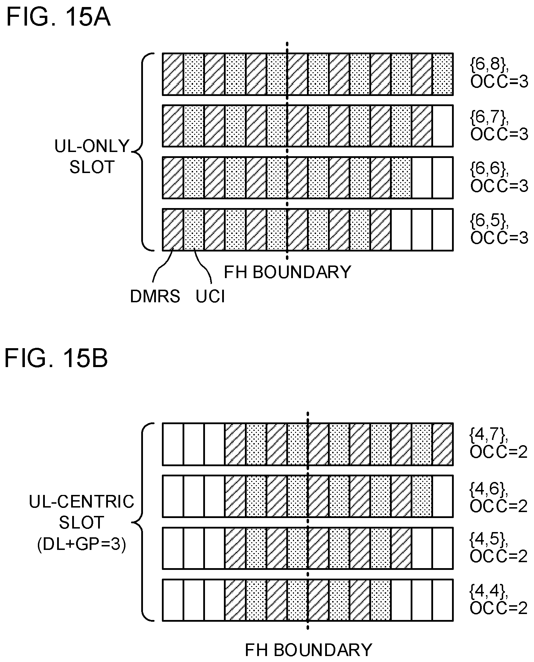

According to the table shown in FIG. 14, as shown in FIG. 15A, when long PUCCHs for a number of user terminals start at symbol #0 in a UL-only slot, the hopping timings can be matched even when the long-PUCCH durations are different by up to three symbols. Therefore, the efficiency of the use of radio resources can be improved.

Also, according to the table shown in FIG. 14, as shown in FIG. 15B, when long PUCCHs for a number of user terminals start at symbol #3 in a UL-centric slot, the hopping timings can be matched even when the long-PUCCH durations are different by up to three symbols. Therefore, the efficiency of the use of radio resources can be improved.

Note that, in the tables shown in FIG. 14, not all of the values changed from those of FIG. 13 may be applied, and the numbers of symbols before and after the hop associated with at least one long-PUCCH duration as the first hopping timing information and/or the second hopping timing information may be changed.

Furthermore, although FIG. 14 shows values that are changed from those of the table shown in FIG. 13, the same changes may be applied to the table shown in FIG. 10, as has been described above with the first variation. That is, in FIG. 14, "N/A" may be associated with the long PUCCH duration of fourteen symbols, instead of the second hopping timing information.

Furthermore, although FIG. 14 shows values that are changed from those of the table shown in FIG. 13, the same changes may be applied to the table shown in FIG. 11, as has been described above with the second variation. When the changes are applied to the table shown in FIG. 11, the long-PUCCH durations, in which a common hopping timing is applied to the case the starting symbol corresponds to an even number and the case the starting symbol corresponds to an odd number, may be different than FIG. 11.

### (Other Aspects)

Although the symbol indices in a slot start from #0 in the first to third aspects and the first and second variations described above, this is by no means limiting. For example, even when the symbol indices in a slot start from #1, the present embodiment can be suitably applied by, for example, reversing the values of the table of even numbers and the table of odd numbers.

Also, although cases have been described with the first to third aspects in which the number of symbols in a slot is fourteen, the number of symbols in a slot is by no means limited to this. The present embodiment can be suitably applied to the case in which the number of symbols is other than fourteen.

Furthermore, with the first to third aspects and the first and second variations described above, cases have been described, in which long-PUCCH durations, first hopping timing information for when the starting symbol corresponds to even numbers, and second hopping timing information for when the starting symbol corresponds to odd numbers are associated with each other in a single table. However, the single table of the present embodiment is not limited to this.

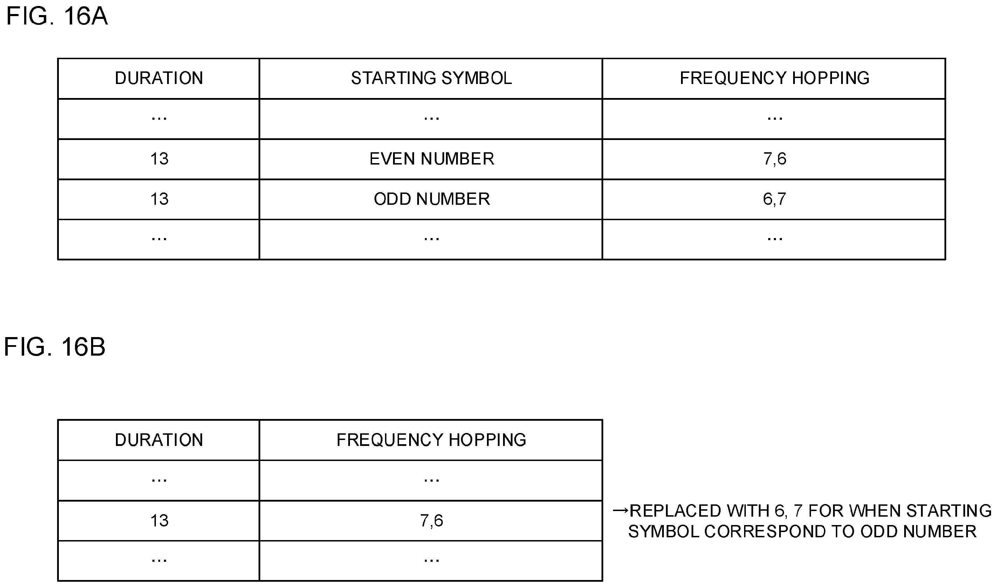

FIGs. 16 are diagrams that each show an example of a table for use for determining hopping timings, according to other aspects. According to the first to third aspects and the first and second variations described above, cases have been described in which hopping timings to be applied to the same long PUCCH duration when the starting symbol corresponds to even numbers and when the starting symbol corresponds to odd numbers are defined in different columns in a single table.

By contrast with this, it is equally possible, as shown in FIG. 16A, to define hopping timings to apply to the same long PUCCH duration when the starting symbol corresponds to even numbers and when the starting symbol corresponds to odd numbers in different rows. For example, as shown in FIG. 16A, in a single table, a long-PUCCH duration, information to show the hopping timing in this long-PUCCH duration (hopping timing information), and information about the starting symbol in this long-PUCCH duration (starting symbol information) may be associated with each other.

Furthermore, FIG. 11 shows long-PUCCH durations that are associated with a number of pieces of hopping timing information (for example, long-PUCCH durations of even numbers of symbols) and long-PUCCH durations associated with a single piece of hopping timing information (for example, long-PUCCH durations of odd numbers of symbols). Meanwhile, as shown in FIG. 16B, information to show a single hopping timing may be associated with a single long-PUCCH duration even when different hopping timings apply to the case in which the starting symbol corresponds to an even number and the case in which the starting symbol corresponds to an odd number. In this case, the values in the table may be replaced depending on whether the starting symbol corresponds to even numbers or odd numbers.

### (Radio Communication System)

Now, the structure of a radio communication system according to the present embodiment will be described below. In this radio communication system, the radio communication methods according to the above-described aspects are employed. Note that the radio communication methods according to the herein-contained aspects and variations may be each used alone, or at least two of them may be combined and used.

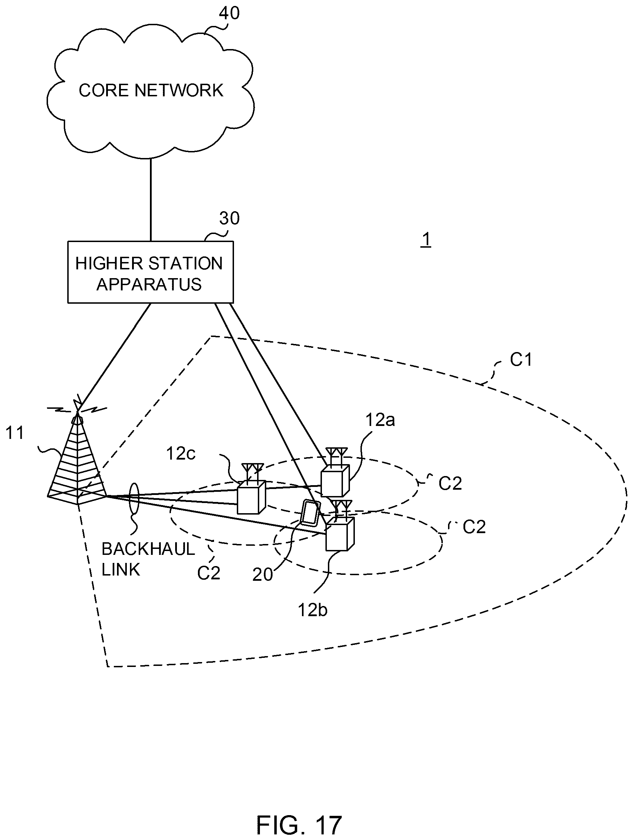

FIG. 17 is a diagram to show an exemplary schematic structure of a radio communication system according to the present embodiment. A radio communication system 1 can adopt carrier aggregation (CA) and/or dual connectivity (DC) to group a number of fundamental frequency blocks (component carriers) into one, where the system bandwidth in LTE systems (for example, 20 MHz) constitutes one unit. Note that the radio communication system 1 may be referred to as "SUPER 3G," "LTE-A, (LTE-Advanced)" "IMT-Advanced," "4G," "5G," "FRA (Future Radio Access)," "NR (New RAT (New Radio Access Technology))," and the like.

The radio communication system 1 shown in FIG. 17 includes a radio base station 11 that forms a macro cell C1, and radio base stations 12a to 12c that are placed within the macro cell C1 and that form small cells C2, which are narrower than the macro cell C1. Also, user terminals 20 are placed in the macro cell C1 and in each small cell C2. A structure in which different numerologies are applied between cells/within cells may be adopted here.

Here, a numerology refers to a communication parameter in the frequency direction and/or the time direction (for example, at least one of the spacing of subcarrier (subcarrier spacing), the bandwidth, the length of a symbol, the length of CP (CP length), the length of a subframe, the time length of a TTI (TTI length), the number of symbols per TTI, the radio frame configuration, the filtering process, the windowing process, etc.). In the radio communication system 1, for example, subcarrier spacings such as 15 kHz, 30 kHz, 60 kHz, 120 kHz and 240 kHz may be supported.

The user terminals 20 can connect with both the radio base station 11 and the radio base stations 12. The user terminals 20 may use the macro cell C1 and the small cells C2, which use different frequencies, at the same time, by means of CA or DC. Also, the user terminals 20 can execute CA or DC by using a number of cells (CCs) (for example, two or more CCs). Furthermore, the user terminals can use licensed-band CCs and unlicensed-band CCs as a number of cells.

Furthermore, the user terminals 20 can communicate based on time division duplexing (TDD) or frequency division duplexing (FDD) in each cell. A TDD cell and an FDD cell may be referred to as a "TDD carrier (frame structure type 2)" and an "FDD carrier (frame structure type 1)," respectively, for example.

Furthermore, in each cell (carrier), a single numerology may be used, or a number of different numerologies may be used.

Between the user terminals 20 and the radio base station 11, communication can be carried out using a carrier of a relatively low frequency band (for example, 2 GHz) and a narrow bandwidth (referred to as, for example, an "existing carrier," a "legacy carrier," and/or the like). Meanwhile, between the user terminals 20 and the radio base stations 12, a carrier of a relatively high frequency band (for example, 3.5 GHz, 5 GHz, 30 to 70 GHz and so on) and a wide bandwidth may be used, or the same carrier as that used with the radio base station 11 may be used. Note that the structure of the frequency band for use in each radio base station is by no means limited to these.

A structure may be employed here in which wire connection (for example, an optical fiber in compliance with the CPRI (Common Public Radio Interface), an X2 interface and so on) or wireless connection is established between the radio base station 11 and the radio base station 12 (or between two radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "gNB (gNodeB)," a "transmitting/receiving point (TRP)," and so on. Also, the radio base stations 12 are radio base stations each having a local coverage, and may be referred to as "small base stations," "micro base stations," "pico base stations," "femto base stations," "HeNBs (Home eNodeBs)," "RRHs (Remote Radio Heads)," "eNBs," "gNBs," "transmitting/receiving points" and so on. Hereinafter, the radio base stations 11 and 12 will be collectively referred to as "radio base stations 10," unless specified otherwise.

The user terminals 20 are terminals that support various communication schemes such as LTE, LTE-A, 5G, NR and so on, and may not be limited to mobile communication terminals, and may be stationary communication terminals. Furthermore, the user terminals 20 can perform device-to-device (D2D) communication with other user terminals 20.

In the radio communication system 1, as radio access schemes, OFDMA (orthogonal Frequency Division Multiple Access) can be applied to the downlink (DL), and SC-FDMA (Single-Carrier Frequency Division Multiple Access) can be applied to the uplink (UL). OFDMA is a multi-carrier communication scheme to perform communication by dividing a frequency bandwidth into a number of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a number of terminals to use mutually different bands. Note that the uplink and downlink radio access schemes are not limited to the combination of these, and OFDMA may be used in the UL.

Also, in the radio communication system 1, a multi-carrier waveform (for example, OFDM waveform) or a single-carrier waveform (for example, DFT-s-OFDM waveform) may be used.

In the radio communication system 1, a DL shared channel (PDSCH (Physical Downlink Shared CHannel), also referred to as a "downlink data channel" or the like), which is shared by each user terminal 20, a broadcast channel (PBCH (Physical Broadcast CHannel)), L1/L2 control channels and so on are used as downlink (DL) channels. At least one of user data, higher layer control information, SIBs (System Information Blocks) and so forth is communicated by the PDSCH. Also, MIBs (Master Information Blocks) are communicated by the PBCH.

The L1/L2 control channels include downlink control channels (such as PDCCH (Physical Downlink Control CHannel), EPDCCH (Enhanced Physical Downlink Control CHannel)), PCFICH (Physical Control Format Indicator CHannel), PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. The EPDCCH is frequency-division-multiplexed with the PDSCH and used to communicate DCI and so on, like the PDCCH. HARQ retransmission control information (ACK/NACK) in response to the PUSCH can be communicated in at least one of the PHICH, the PDCCH and the EPDCCH.

In the radio communication system 1, an uplink shared channel (PUSCH (Physical Uplink Shared CHannel), also referred to as an "uplink data channel" or the like), which is shared by each user terminal 20, an uplink control channel (PUCCH (Physical Uplink Control CHannel)), a random access channel (PRACH (Physical Random Access CHannel)) and so on are used as uplink (UL) channels. User data, higher layer control information and so on are communicated by the PUSCH. Uplink control information (UCI), including at least one of retransmission control information (A/N) in response to downlink (DL) signals, channel state information (CSI) and so on, is communicated by the PUSCH or the PUCCH. By means of the PRACH, random access preambles for establishing connections with cells can be communicated.

### <Radio Base Station>

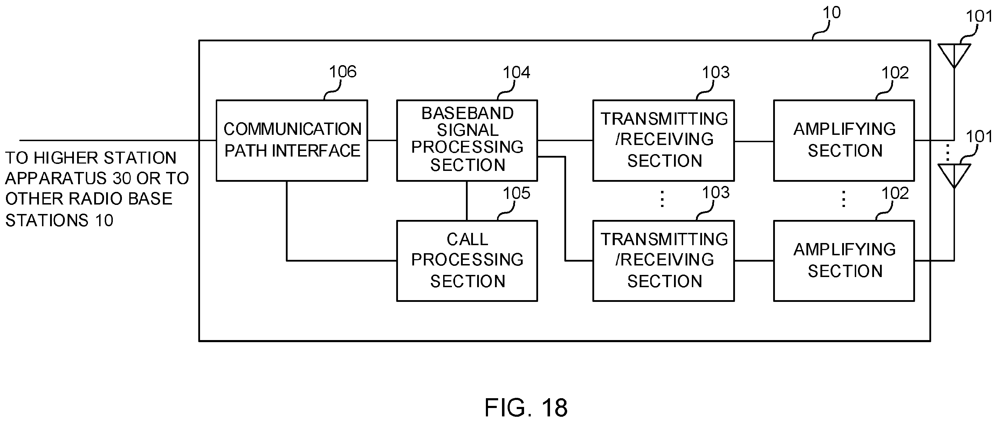

FIG. 18 is a diagram to show an exemplary overall structure of a radio base station according to the present embodiment. A radio base station 10 has a number of transmitting/receiving antennas 101, amplifying sections 102, transmitting/receiving sections 103, a baseband signal processing section 104, a call processing section 105 and a communication path interface 106. Note that one or more transmitting/receiving antennas 101, one or more amplifying sections 102 and one or more transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process, a precoding process and so forth, and the result is forwarded to each transmitting/receiving section 103. Furthermore, downlink control signals are also subjected to transmission processes such as channel coding and an inverse fast Fourier transform, and the result is forwarded to the transmitting/receiving sections 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101.

The transmitting/receiving section 103 can be constituted by a transmitters/receiver, a transmitting/receiving circuit or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for uplink (UL) signals, radio frequency signals that are received in the transmitting/receiving antennas 101 are each amplified in the amplifying sections 102. The transmitting/receiving sections 103 receive the UL signals amplified in the amplifying sections 102. The received signals are converted into the baseband signal through frequency conversion in the transmitting/receiving sections 103 and output to the baseband signal processing section 104.

In the baseband signal processing section 104, UL data that is included in the UL signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base stations 10 and manages the radio resources.

The communication path interface section 106 transmits and receives signals to and from the higher station apparatus 30 via a given interface. Also, the communication path interface 106 may transmit and receive signals (backhaul signaling) with neighboring radio base stations 10 via an inter-base station interface (which is, for example, optical fiber in compliance with the CPRI (Common Public Radio Interface), the X2 interface, etc.).

Furthermore, the transmitting/receiving sections 103 transmit downlink (DL) signals (including at least one of DL data signals, DL control signals and DL reference signals) to the user terminal 20, and receive uplink (UL) signals (including at least one of UL data signals, UL control signals and UL reference signals) from the user terminal 20.

Also, the transmitting/receiving sections 103 receive UCI from the user terminal 20 by using an uplink data channel (for example, PUSCH) or an uplink control channel (for example, a short PUCCH and/or a long PUCCH). This UCI may include at least one of an HARQ-ACK in response to a downlink data channel (for example, PDSCH), CSI, an SR, beam identification information (for example, a beam index (BI)), and a buffer status report (BSR).

Furthermore, the transmitting/receiving sections 103 transmit control information based on higher layer signaling (higher layer control information) and downlink control information (DCI) based on physical layer signaling. To be more specific, the transmitting/receiving sections 103 may transmit at least one of configuration information to show PUCCH resources, information to show PUCCH formats and/or durations, and information to show the starting positions (starting symbols) of long PUCCHs by physical layer signaling (L1 signaling) and/or higher layer signaling.

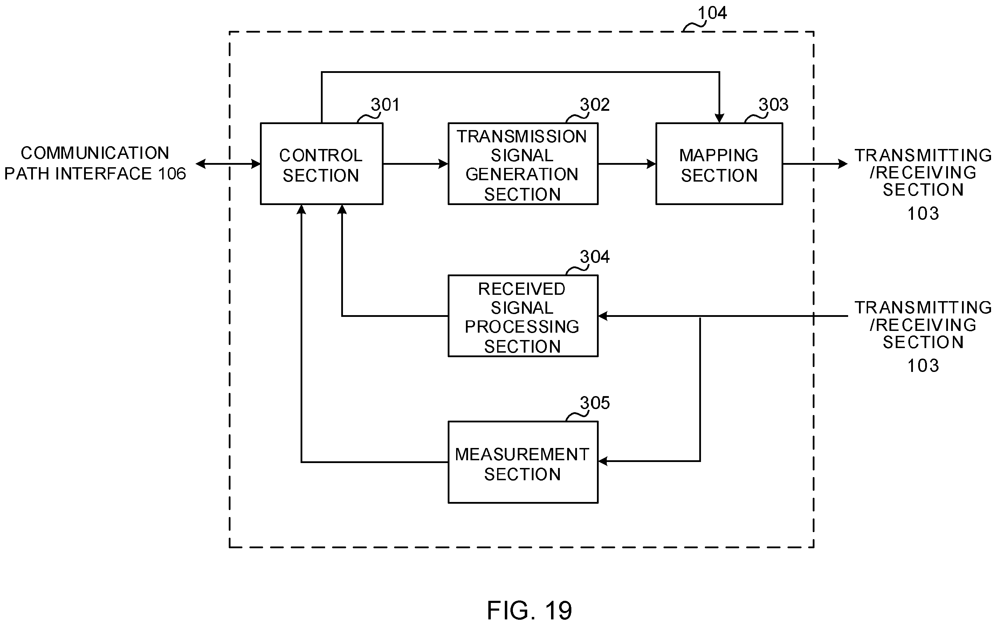

FIG. 19 is a diagram to show an exemplary functional structure of a radio base station according to the present embodiment. Note that, although FIG. 19 primarily shows functional blocks that pertain to characteristic parts of the present embodiment, the radio base station 10 has other functional blocks that are necessary for radio communication as well. As shown in FIG. 19, the baseband signal processing section 104 has a control section 301, a transmission signal generation section 302, a mapping section 303, a received signal processing section 304 and a measurement section 305.

The control section 301 controls the whole of the radio base station 10. The control section 301 controls, for example, the generation of DL signals by the transmission signal generation section 302, the mapping of DL signals by the mapping section 303, the receiving processes (for example, demodulation) for UL signals by the received signal processing section 304 and the measurements by the measurement section 305.

To be more specific, the control section 301 schedules user terminals 20. To be more specific, the control section 301 may control scheduling and/or retransmission for the downlink data channels and/or the uplink data channels based on UCI (for example, CSI and/or BI) from the user terminal 20.

Also, the control section 301 may exert control so that the format of an uplink control channel (for example, a long PUCCH and/or a short PUCCH) is controlled, and control information related to this uplink control channel is transmitted.

Furthermore, the control section 301 may determine the frequency resource for mapping the uplink control channel (which is, for example, a long PUCCH) to use to transmit UCI by using a single table that defines hopping timings for each duration of the uplink control channel.

In the above single table, the durations of the uplink control channel, first hopping timing information, which show the hopping timings for when the index of the starting symbol of the uplink control channel corresponds to even numbers, and second hopping timing information, which shows the hopping timings for when the index of the starting symbol corresponds to odd numbers, may be associated with each other.

Also, in the single table above, the durations of the uplink control channel may be associated with common hopping timing information, which shows hopping timings that apply in common to the case the starting symbol index corresponds to even numbers and the case the starting symbol index corresponds to even numbers.

The hopping timings defined in the above-described single table may be determined so that the hopping timings for a number of uplink control channels having the same starting symbol index and having durations that are different by given numbers of symbols are matched.

The hopping timing for a specific duration defined in the above single table may be determined based on the ratio of UCI and the demodulation reference signal mapped to the same frequency resource.

Furthermore, the control section 301 may control PUCCH resources.

The control section 301 may control the received signal processing section 304 to perform receiving processes for the UCI from the user terminal 20 based on the format of the uplink control channel.

The control section 301 can be constituted by a controller, a control circuit or control apparatus that can be described based on general understanding of the technical field to which the present invention pertains.

The transmission signal generation section 302 generates DL signals (including DL data signals, DL control signals, DL reference signals and so on) as commanded by the control section 301, and outputs these signals to the mapping section 303.

The transmission signal generation section 302 can be constituted by a signal generator, a signal generating circuit or signal generating apparatus that can be described based on general understanding of the technical field to which the present invention pertains.

The mapping section 303 maps the DL signals generated in the transmission signal generation section 302 to given radio resources, based on commands from the control section 301, and outputs the result to the transmitting/receiving sections 103. The mapping section 303 may be a mapper, a mapping circuit or mapping apparatus that can be described based on general understanding of the technical field to which the present invention pertains.

The received signal processing section 304 performs receiving processes (for example, demapping, demodulation, decoding, etc.) of UL signals transmitted from the user terminals 20 (including, for example, a UL data signal, a UL control signal, a UL reference signal, etc.). To be more specific, the received signal processing section 304 may output the received signals, the signals after the receiving processes and so on, to the measurement section 305. In addition, the received signal processing section 304 performs UCI receiving processes based on the uplink control channel format specified by the control section 301.

The measurement section 305 conducts measurements with respect to the received signals. The measurement section 305 can be constituted by a measurer, a measurement circuit or measurement apparatus that can be described based on general understanding of the technical field to which the present invention pertains.

Also, the measurement section 305 may measure the channel quality in UL based on, for example, the received power (for example, RSRP (Reference Signal Received Power)) and/or the received quality (for example, RSRQ (Reference Signal Received Quality)) of UL reference signals. The measurement results may be output to the control section 301.

### <User Terminal>

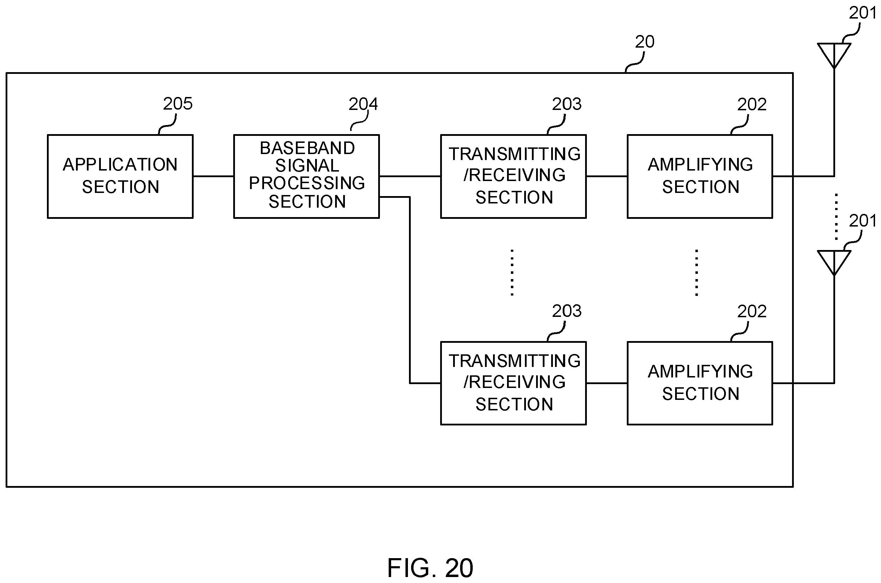

FIG. 20 is a diagram to show an exemplary overall structure of a user terminal according to the present embodiment. A user terminal 20 has a number of transmitting/receiving antennas 201 for MIMO communication, amplifying sections 202, transmitting/receiving sections 203, a baseband signal processing section 204 and an application section 205.

Radio frequency signals that are received in multiple transmitting/receiving antennas 201 are amplified in the amplifying sections 202. The transmitting/receiving sections 203 receive DL signals amplified in the amplifying sections 202. The received signals are subjected to frequency conversion and converted into the baseband signal in the transmitting/receiving sections 203, and output to the baseband signal processing section 204.

In the baseband signal processing section 204, the baseband signal that is input is subjected to an FFT process, error correction decoding, a retransmission control receiving process, and so on. The DL data is forwarded to the application section 205. The application section 205 performs processes related to higher layers above the physical layer and the MAC layer, and so on. Also, the broadcast information is also forwarded to application section 205.

Meanwhile, uplink (UL) data is input from the application section 205 to the baseband signal processing section 204. The baseband signal processing section 204 performs a retransmission control transmission process (for example, an HARQ transmission process), channel coding, rate matching, puncturing, a discrete Fourier transform (DFT) process, an IFFT process and so on, and the result is forwarded to each transmitting/receiving section 203. UCI is also subjected to at least one of channel coding, rate matching, puncturing, a DFT process and an IFFT process, and the result is forwarded to each transmitting/receiving section 203.

Baseband signals that are output from the baseband signal processing section 204 are converted into a radio frequency band in the transmitting/receiving sections 203, and transmitted. The radio frequency signals that are subjected to frequency conversion in the transmitting/receiving sections 203 are amplified in the amplifying sections 202, and transmitted from the transmitting/receiving antennas 201.

Furthermore, the transmitting/receiving sections 203 receive downlink (DL) signals (including DL data signals, DL control signals and DL reference signals) of the numerologies configured in the user terminal 20, and transmit UL signals (including UL data signals, UL control signals and UL reference signals) of these numerologies.

Also, the transmitting/receiving sections 203 transmit UCI to the radio base station 10 by using an uplink data channel (for example, PUSCH) or an uplink control channel (for example, a short PUCCH and/or a long PUCCH).

Also, the transmitting/receiving sections 203 receive control information (higher layer control information) that is provided by way of higher layer signaling and downlink control information (DCI) that is provided by way of physical layer signaling. To be more specific, the transmitting/receiving sections 203 may receive at least one of configuration information to show PUCCH resources, information to show PUCCH formats and/or durations, and information to show long-PUCCH starting positions (starting symbols) by way of physical layer signaling (L1 signaling) and/or higher layer signaling.

A transmitting/receiving sections 203 can be constituted by a transmitter/receiver, a transmitting/receiving circuit or transmitting/receiving apparatus that can be described based on general understanding of the technical field to which the present invention pertains. Furthermore, a transmitting/receiving sections 203 may be structured as one transmitting/receiving section, or may be formed with a transmitting section and a receiving section.

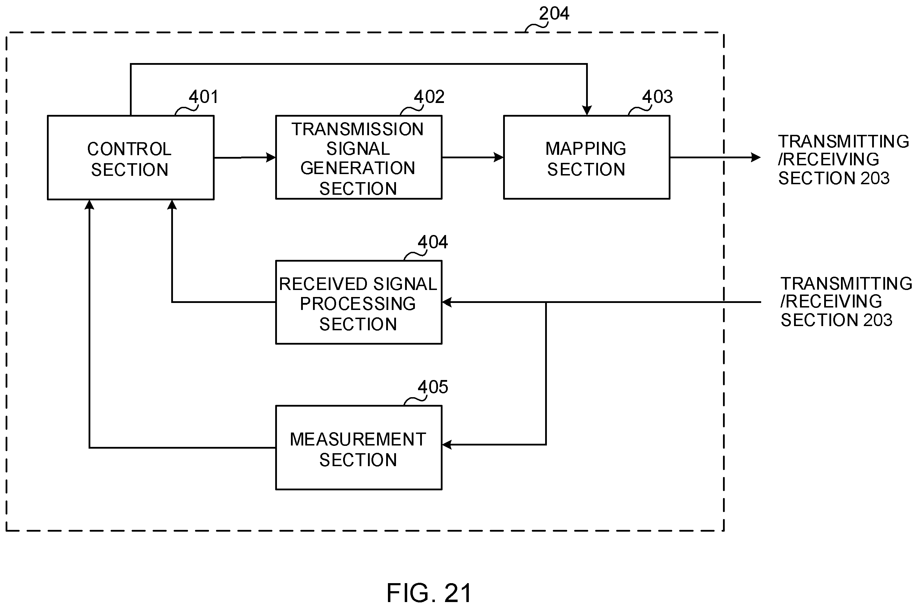

FIG. 21 is a diagram to show an exemplary functional structure of a user terminal according to the present embodiment. Note that, although FIG. 21 primarily shows functional blocks that pertain to characteristic parts of the present embodiment, the user terminal 20 may have other functional blocks that are necessary for radio communication as well. As shown in FIG. 21, the baseband signal processing section 204 provided in the user terminal 20 has a control section 401, a transmission signal generation section 402, a mapping section 403, a received signal processing section 404, and a measurement section 405.

The control section 401 controls the whole of the user terminal 20. The control section 401 controls, for example, the generation of UL signals in the transmission signal generation section 402, the mapping of UL signals in the mapping section 403, the DL signal receiving processes in the received signal processing section 404, the measurements in the measurement section 405.

In addition, the control section 401 controls the uplink control channel to use to transmit UCI from the user terminal 20 based on explicit indications from the radio base station 10 or based on implicit selection in the user terminal 20.

Also, the control section 401 may control the format of the uplink control channel (for example, a long PUCCH and/or a short PUCCH). The control section 401 may control the uplink control channel's format based on control information from the radio base station 10.

Also, the control section 401 may determine the frequency resource for mapping the uplink control channel (which is, for example, a long PUCCH) to use to transmit UCI by using a single table that defines hopping timings for each duration of the uplink control channel.

In the above single table, the durations of the uplink control channel, first hopping timing information, which show the hopping timings for when the index of the starting symbol of the uplink control channel corresponds to even numbers, and second hopping timing information, which shows the hopping timings for when the index of the starting symbol corresponds to odd numbers may be associated with each other.

Also, in the single table above, the durations of the uplink control channel may be associated with common hopping timing information, which shows hopping timings that apply in common to the case the starting symbol index corresponds to even numbers and the case the starting symbol index corresponds to even numbers.

The hopping timings defined in the above-described single table may be determined so that the hopping timings for a number of uplink control channels having the same starting symbol index and having durations that are different by given numbers of symbols are matched.

The hopping timing for a specific duration defined in the above single table may be determined based on the ratio of UCI and the demodulation reference signal mapped to the same frequency resource.

Furthermore, the control section 401 may select the PUCCH resources to use in the PUCCH format based on higher layer signaling and/or downlink control information.

The control section 401 may control at least one of the transmission signal generation section 402, the mapping section 403, and the transmitting/receiving sections 203 so as to perform UCI transmission processes based on the PUCCH format.

The control section 401 can be constituted by a controller, a control circuit or control apparatus that can be described based on general understanding of the technical field to which the present invention pertains.

In the transmission signal generation section 402, UL signals (including UL data signals, UL control signals, UL reference signals, UCI, etc.) are generated (including, for example, coding, rate matching, puncturing, modulation, etc.) as commanded by the control section 401, and output to the mapping section 403. The transmission signal generation section 402 can be constituted by a signal generator, a signal generating circuit or signal generating apparatus that can be described based on general understanding of the technical field to which the present invention pertains.

The mapping section 403 maps the UL signals generated in the transmission signal generation section 402 to a given radio resources, as commanded by the control section 401, and outputs the result to the transmitting/receiving sections 203. The mapping section 403 can be constituted by a mapper, a mapping circuit or mapping apparatus that may be described based on general understanding of the technical field to which the present invention pertains.

The received signal processing section 404 performs receiving processes (for example, demapping, demodulation, decoding, etc.) of DL signals (including DL data signals, scheduling information, DL control signals, DL reference signals, etc.). The received signal processing section 404 outputs the information received from the radio base station 10, to the control section 401. The received signal processing section 404 outputs, for example, broadcast information, system information, higher layer control information through the higher layer signaling such as RRC signaling, physical layer control information (L1/L2 control information) and so on, to the control section 401.

The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The measurement section 405 measures channel states based on reference signals (for example, CSI-RSs) from the radio base station 10, and outputs the measurement results to the control section 401. Note that channel state measurements may be conducted per CC.

The measurement section 405 can be constituted by a signal processor, a signal processing circuit or signal processing apparatus, and a measurer, a measurement circuit or measurement apparatus that can be described based on general understanding of the technical field to which the present invention pertains.

### <Hardware Structure>

Note that the block diagrams that have been used to describe the above embodiments show blocks in functional units. These functional blocks (components) may be implemented in arbitrary combinations of hardware and/or software. Also, the method for implementing each functional block is not particularly limited. That is, each functional block may be realized by one piece of apparatus that is physically and/or logically aggregated, or may be realized by directly and/or indirectly connecting two or more physically and/or logically-separate pieces of apparatus (via wire and/or wireless, for example) and using these multiple pieces of apparatus.

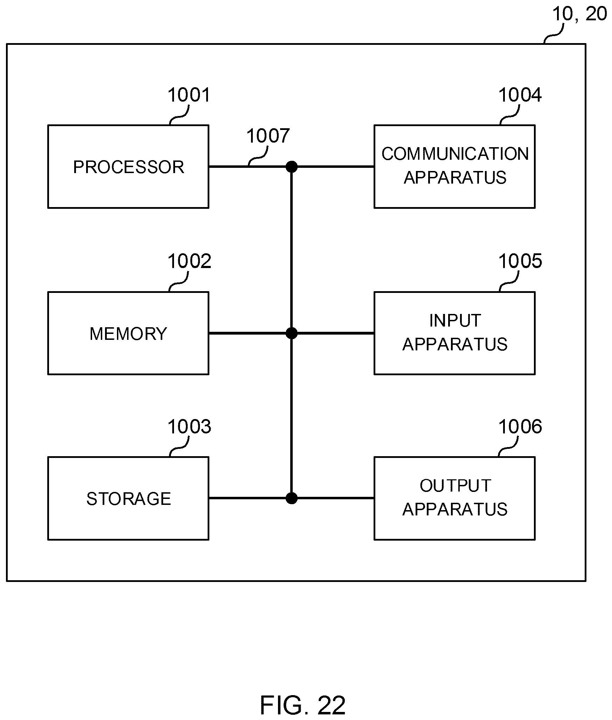

For example, a radio base station, a user terminal and so on according to the present embodiment may function as a computer that executes the processes of the radio communication method of the present invention. FIG. 22 is a diagram to show an example of a hardware structure of a radio base station and a user terminal according to the present embodiment. Physically, the above-described radio base station 10 and user terminals 20 may each be formed as computer apparatus that includes a processor 1001, a memory 1002, a storage 1003, a communication apparatus 1004, an input apparatus 1005, an output apparatus 1006, a bus 1007 and so on.

Note that, in the following description, the term "apparatus" may be replaced by "circuit," "device," "unit" and so on. The hardware structure of a radio base station 10 and the user terminals 20 may be designed to include one or more of apparatuses shown in the drawings, or may be designed not to include part of the apparatuses.

For example, although only one processor 1001 is shown, a number of processors may be provided. Furthermore, processes may be implemented with one processor, or processes may be implemented simultaneously or in sequence, or in different manners with on one or more processors. Note that the processor 1001 may be implemented with one or more chips.

The functions of the radio base station 10 and the user terminal 20 are implemented by, for example, allowing hardware such as the processor 1001 and the memory 1002 to read given software (programs), and allowing the processor 1001 to do calculations, control communication that involves the communication apparatus 1004, control the reading and/or writing of data in the memory 1002 and the storage 1003, and so on.

The processor 1001 controls the whole computer by, for example, running an operating system. The processor 1001 may be constituted by a central processing unit (CPU), which includes interfaces with peripheral apparatus, control apparatus, computing apparatus, a register, and so on. For example, the above-described baseband signal processing section 104 (204), call processing section 105, and so on may be implemented by the processor 1001.

Furthermore, the processor 1001 reads programs (program codes), software modules, data, and so forth from the storage 1003 and/or the communication apparatus 1004, into the memory 1002, and executes various processes according to these. As for the programs, programs to allow computers to execute at least part of the operations of the above-described embodiments are used. For example, the control section 401 of a user terminal 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory), and other appropriate storage media. The memory 1002 may be referred to as a "register," a "cache," a "main memory" (primary storage apparatus), and so on. The memory 1002 can store executable programs (program codes), software modules and so on for implementing the radio communication methods according to the present embodiment.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) or the like), a digital versatile disc, a Blu-ray (registered trademark) disk, etc.), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving device) for allowing inter-computer communication via wired and/or wireless networks, and may be referred to as, for example, a "network device," a "network controller," a "network card," a "communication module," and so on. The communication apparatus 1004 may be configured to include a high frequency switch, a duplexer, a filter, a frequency synthesizer and so on, in order to implement, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from outside (for example, a keyboard, a mouse, a microphone, a switch, a button, a sensor and so on). The output apparatus 1006 is an output device for allowing sending output to outside (for example, a display, a speaker, an LED (Light Emitting Diode) lamp, and so on). Note that the input apparatus 1005 and the output apparatus 1006 may be provided in an integrated structure (for example, a touch panel).

Furthermore, these pieces of apparatus, including the processor 1001, the memory 1002 and so on, are connected by the bus 1007, so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by these pieces of hardware. For example, the processor 1001 may be implemented with at least one of these pieces of hardware.

### (Variations)

Note that, the terminology used in this specification and the terminology that is needed to understand this specification may be replaced by other terms that communicate the same or similar meanings. For example, a "channel" and/or a "symbol" may be replaced by a "signal" (or "signaling"). Also, a signal may be a message. A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency," and so on.

Furthermore, a radio frame may be comprised of one or more periods (frames) in the time domain. One or more periods (frames) that constitute a radio frame may be each referred to as a "subframe." Furthermore, a subframe may be comprised of one or more slots in the time domain. A subframe may be a fixed time duration (for example, 1 ms), which does not depend on numerology.

Furthermore, a slot may be comprised of one or more symbols in the time domain (OFDM (Orthogonal Frequency Division Multiplexing) symbols, SC-FDMA (Single Carrier Frequency Division Multiple Access) symbols, and so on). Also, a slot may be a time unit based on numerology. Also, a slot may include a number of minislots. Each minislot may be comprised of one or more symbols in the time domain. Also, a minislot may be referred to as a "subslot."

A radio frame, a subframe, a slot, a minislot, and a symbol all refer to a unit of time in signal communication. A radio frame, a subframe, a slot, a minislot and a symbol may be each called by other applicable terms. For example, one subframe may be referred to as a "transmission time interval (TTI)," or a number of contiguous subframes may be referred to as a "TTI," or one slot or one mini-slot may be referred to as a "TTI." That is, a subframe and/or a TTI may be a subframe (1 ms) in existing LTE, may be a shorter period than 1 ms (for example, one to thirteen symbols), or may be a longer period of time than 1 ms. Note that the unit to represent a TTI may be referred to as a "slot," a "minislot" and so on, instead of a "subframe."

Here, a TTI refers to the minimum time unit of scheduling in radio communication, for example. For example, in LTE systems, a radio base station schedules the radio resources (such as the frequency bandwidth and transmission power that each user terminal can use) to allocate to each user terminal in TTI units. Note that the definition of TTIs is not limited to this.

A TTI may be transmission time units for channel-encoded data packets (transport blocks), code blocks and/or codewords, or may be the unit of processing in scheduling, link adaptation, and so on. Note that, when TTIs are given, the period of time (for example, the number of symbols) to which transport blocks, code blocks and/or codewords are actually mapped may be shorter than the TTIs.

Note that, in the case where one slot or one minislot is referred to as a "TTI," one or more TTIs (that is, one or more slots or one or more minislots) may be the minimum time unit of scheduling. Also, the number of slots (the number of minislots) to constitute this minimum time unit for scheduling may be controlled.

A TTI having a time length of 1 ms may be referred to as a "normal TTI" (TTI in LTE Rel. 8 to 12), a "long TTI," a "normal subframe," a "long subframe," and so on. A TTI that is shorter than a normal TTI may be referred to as a "shortened TTI," a "short TTI," a "partial TTI" (or a "fractional TTI"), a "shortened subframe," a "short subframe," a "minislot," a "sub-slot," and so on.

Note that a long TTI (for example, a normal TTI, a subframe, etc.) may be replaced with a TTI having a time duration exceeding 1 ms, and a short TTI (for example, a shortened TTI) may be replaced with a TTI having a TTI length less than the TTI length of a long TTI and not less than 1 ms.

A resource block (RB) is the unit of resource allocation in the time domain and the frequency domain, and may include one or a number of contiguous subcarriers in the frequency domain. Also, an RB may include one or more symbols in the time domain, and may be one slot, one minislot, one subframe or one TTI in length. One TTI and one subframe each may be comprised of one or more resource blocks. Note that one or more RBs may be referred to as a "physical resource block (PRB (Physical RB))," a "subcarrier group (SCG)," a "resource element group (REG)," a "PRB pair," an "RB pair," and so on.

Furthermore, a resource block may be comprised of one or more resource elements (REs). For example, one RE may be a radio resource field of one subcarrier and one symbol.

Note that the structures of radio frames, subframes, slots, minislots, symbols, and so on described above are merely examples. For example, structures such as the number of subframes included in a radio frame, the number of slots per subframe or radio frame, the number of minislots included in a slot, the number of symbols and RBs included in a slot or a minislot, the numbers of subcarriers included in an RB, the number of symbols in a TTI, the symbol duration, the length of cyclic prefixes (CPs), and so on can be variously changed.

Also, the information and parameters and so on described in this specification may be represented in absolute values or in relative values with respect to given values, or may be represented in another corresponding information. For example, a radio resource may be indicated by a given index.

The names used for parameters and so on in this specification are in no respect limiting. For example, since various channels (PUCCH (Physical Uplink Control Channel), PDCCH (Physical Downlink Control Channel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, and so on, all of which may be referenced throughout the herein-contained description, may be represented by voltages, currents, electromagnetic waves, magnetic fields or particles, optical fields or photons, or any combination of these.

Also, information, signals, and so on can be output from higher layers to lower layers, and/or from lower layers to higher layers. Information, signals, and so on may be input and/or output via a number of network nodes.

The information, signals, and so on that are input and/or output may be stored in a specific location (for example, a memory), or may be managed by using a management table. The information, signals, and so on to be input and/or output can be overwritten, updated, or appended. The information, signals, and so on that are output may be deleted. The information, signals, and so on that are input may be transmitted to other pieces of apparatus.

The reporting of information is by no means limited to those used in the aspects/embodiments described in this specification, and other methods may be used as well. For example, reporting of information may be implemented by using physical layer signaling (for example, downlink control information (DCI), uplink control information (UCI)), higher layer signaling (for example, RRC (Radio Resource Control) signaling, broadcast information (the master information block (MIB), system information blocks (SIBs) and so on), MAC (Medium Access Control) signaling, etc.), and other signals and/or combinations of these.

Note that physical layer signaling may be referred to as "L1/L2 (Layer 1/Layer 2) control information (L1/L2 control signals)," "L1 control information (L1 control signal)," and so on. Also, RRC signaling may be referred to as "RRC messages," and can be, for example, an "RRC connection setup (RRCConnectionSetup) message," "RRC connection reconfiguration (RRCConnectionReconfiguration) message," and so on. Also, MAC signaling may be reported using, for example, MAC control elements (MAC CEs (Control Elements)).

Also, reporting of given information (for example, reporting of "X holds") does not necessarily have to be sent explicitly, and can be sent in an implicit way (for example, by not reporting this given information, or by reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions, and so on.

Also, software, instructions, information and so on may be transmitted and received via communication media. For example, when software is transmitted from a website, a server or other remote sources by using wired technologies (coaxial cables, optical fiber cables, twisted-pair cables, digital subscriber lines (DSLs) and so on), and/or wireless technologies (infrared radiation, microwaves, and so on), these wired technologies and/or wireless technologies are also included in the definition of communication media.

The terms "system" and "network" as used herein are used interchangeably.

As used herein, the terms "base station (BS)," "radio base station," "eNB," "gNB," "cell," "sector," "cell group," "carrier," and "component carrier" may be used interchangeably. A base station may be referred to as a "fixed station," a "NodeB," an "eNodeB (eNB)," an "access point," a "transmission point," a "receiving point," a "transmitting/receiving point," a "femto cell," a "small cell," and so on.

A base station can accommodate one or more (for example, three) cells (also referred to as "sectors"). When a base station accommodates a number of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage.

As used herein, the terms "mobile station (MS)," "user terminal," "user equipment (UE)," and "terminal" may be used interchangeably.

A mobile station may be referred to as a "subscriber station," a "mobile unit," a "subscriber unit," a "wireless unit," a "remote unit," a "mobile device," a "wireless device," a "wireless communication device," a "remote device," a "mobile subscriber station," a "access terminal," a "mobile terminal," a "wireless terminal," a "remote terminal," a "handset," a "user agent," a "mobile client," a "client," or some other suitable terms.

A base station and/or a mobile station may be referred to as "transmitting apparatus," "receiving apparatus," and the like.

Furthermore, the radio base stations in this specification may be interpreted as user terminals. For example, each aspect/embodiment of the present invention may be applied to a configuration in which communication between a radio base station and a user terminal is replaced with communication among a number of user terminals (D2D (Device-to-Device)). In this case, user terminals 20 may have the functions of the radio base stations 10 described above. In addition, terms such as "uplink" and "downlink" may be interpreted as "side." For example, an "uplink channel" may be interpreted as a "side channel."

Likewise, the user terminals in this specification may be interpreted as radio base stations. In this case, the radio base stations 10 may have the functions of the user terminals 20 described above.

Certain actions which have been described in this specification to be performed by base stations may, in some cases, be performed by their upper nodes. In a network comprised of one or more network nodes with base stations, it is clear that various operations that are performed so as to communicate with terminals can be performed by base stations, one or more network nodes (for example, MMEs (Mobility Management Entities), S-GWs (Serving-Gateways), and so on may be possible, but these are not limiting) other than base stations, or combinations of these.

The aspects/embodiments illustrated in this specification may be used individually or in combinations, which may be switched depending on the mode of implementation. Also, the order of processes, sequences, flowcharts, and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to systems that use LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR (New Radio), NX (New radio access), FX (Future generation radio access), GSM (registered trademark) (Global System for Mobile communications), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), other adequate radio communication methods, and/or next-generation systems that are enhanced based on these.

The phrase "based on" as used in this specification does not mean "based only on" unless otherwise specified. In other words, the phrase "based on" means both "based only on" and "based at least on."

Reference to elements with designations such as "first," "second," and so on as used herein does not generally limit the number/quantity or order of these elements. These designations may be used herein only for convenience, as a method for distinguishing between two or more elements. Thus, reference to the first and second elements does not imply that only two elements may be employed, or that the first element must precede the second element in some way.

The terms "judging (determining)" as used herein may encompass a wide variety of actions. For example, "judging (determining)" may be interpreted to mean making "judgements (determinations)" related to calculating, computing, processing, deriving, investigating, looking up (for example, searching a table, a database, or some other data structure), ascertaining, and so on. Furthermore, to "judging (determining)" may be interpreted as meaning making "judgements (determinations)" related to receiving (for example, receiving information), transmitting (for example, transmitting information), inputting, outputting, accessing (for example, accessing data in a memory) and so on. In addition, to "judging (determining)" as used in the present disclosure may be interpreted as meaning making "judgements (determinations)" related to resolving, selecting, choosing, establishing, comparing, and so on. In other words, "judging (determining)" may be interpreted as meaning making "judgements (determinations)" with regard to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

As used herein, when two elements are connected, these elements may be considered "connected" or "coupled" to each other by using one or more electrical wires, cables, and/or printed electrical connections, and, as a number of nonlimiting and non-inclusive examples, by using electromagnetic energy having wavelengths of the radio frequency region, the microwave region and/or the optical region (both visible and invisible).

In the present specification, the phrase "A and B are different" may mean "A and B are different from each other." The terms such as "leave," "coupled" and the like may be interpreted likewise.

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

The present invention is defined by the recitations of claims. Consequently, the description herein is provided only for the purpose of explaining examples, and should by no means be construed to limit the present invention in any way.

## Claims

1. A terminal (20) comprising:
a transmitting section (203) configured to transmit uplink control information, UCI, by using an uplink control channel; and
a control section (401) configured to control a frequency resource for mapping the uplink control channel to use to transmit the UCI, by using a single table that defines hopping timings for each duration of the uplink control channel,
wherein, in the single table, the duration of the uplink control channel may be associated with common hopping timing information, which shows a hopping timing that applies in common to a case an index of a starting symbol corresponds to the even number and a case the index of the starting symbol corresponds to the odd number and
wherein a hopping timing for a specific duration defined in the single table is determined based on a ratio, which is 50%, of UCI and a demodulation reference signal mapped to a same frequency resource in the case an index of a starting symbol corresponds to the even number and in the case the index of the starting symbol corresponds to the odd number.

2. The terminal according to claim 1, wherein, in the single table, a duration of the uplink control channel, first hopping timing information that shows a hopping timing for when an index of a starting symbol of the uplink control channel corresponds to an even number, and second hopping timing information that shows a hopping timing for when the index of the starting symbol corresponds to an odd number are associated with each other.

3. The terminal according to claim 1 or 2, wherein the hopping timings defined in the single table are determined so that a hopping timings for a number of uplink control channels having a same starting symbol index and having durations that are different by a given number of symbols are matched.

4. A radio communication method for a terminal (20), comprising the steps of:
transmitting uplink control information, UCI, by using an uplink control channel, and;
controlling a frequency resource for mapping the uplink control channel to use to transmit the UCI by using a single table that defines hopping timings for each duration of the uplink control channel,
wherein, in the single table, the duration of the uplink control channel may be associated with common hopping timing information, which shows a hopping timing that applies in common to a case an index of a starting symbol corresponds to the even number and a case the index of the starting symbol corresponds to the odd number and
wherein a hopping timing for a specific duration defined in the single table is determined based on a ratio, which is 50%, of UCI and a demodulation reference signal mapped to a same frequency resource in the case an index of a starting symbol corresponds to the even number and in the case the index of the starting symbol corresponds to the odd number.

## Patentansprüche

1. Endgerät (20), umfassend:
einen Sendeabschnitt (203), der so konfiguriert ist, dass er Aufwärtsverbindungssteuerinformationen, UCI, unter Verwendung eines Aufwärtsverbindungssteuerkanals sendet; und
einen Steuerungsabschnitt (401), der so konfiguriert ist, dass er eine Frequenzressource zum Abbilden des Aufwärtsverbindungssteuerkanals, der zum Übertragen der UCI verwendet werden soll, unter Verwendung einer einzigen Tabelle steuert, die Sprungzeiten für jede Dauer des Aufwärtsverbindungssteuerkanals definiert, wobei
in der einzelnen Tabelle die Dauer des Aufwärtsverbindungssteuerkanals einer gemeinsamen Sprungzeitinformation zugeordnet werden kann, die eine Sprungzeit zeigt, die gemeinsam für den Fall gilt, dass ein Index eines Startsymbols der geraden Zahl entspricht und für den Fall, dass der Index des Startsymbols der ungeraden Zahl entspricht, und
wobei eine Sprungzeit für eine spezifische Dauer, die in der einzelnen Tabelle definiert ist, auf der Grundlage eines Verhältnisses, das 50 % beträgt, der UCI und eines Demodulationsreferenzsignals, das auf eine gleiche Frequenzressource abgebildet wird, bestimmt wird, falls ein Index eines Startsymbols der geraden Zahl entspricht und falls der Index des Startsymbols der ungeraden Zahl entspricht.

2. Endgerät nach Anspruch 1, wobei in der einzelnen Tabelle eine Dauer des Aufwärtsverbindungssteuerkanals, erste Sprungzeitinformationen, die eine Sprungzeit für den Fall zeigen, dass ein Index eines Startsymbols des Aufwärtsverbindungssteuerkanals einer geraden Zahl entspricht, und zweite Sprungzeitinformationen, die eine Sprungzeit für den Fall zeigen, dass der Index des Startsymbols einer ungeraden Zahl entspricht, einander zugeordnet sind.

3. Endgerät nach Anspruch 1 oder 2, wobei die in der Einzeltabelle definierten Sprungzeiten so bestimmt werden, dass die Sprungzeiten für eine Anzahl von Aufwärtsverbindungssteuerkanälen, die einen gleichen Index des Startsymbols aufweisen und Dauern aufweisen, die sich um eine gegebene Anzahl von Symbolen unterscheiden, übereinstimmen.

4. Funkkommunikationsverfahren für ein Endgerät (20), das die folgenden Schritte umfasst:
Senden von Aufwärtsverbindungssteuerinformationen, UCI, unter Verwendung eines Aufwärtsverbindungssteuerkanals; und
Steuern einer Frequenzressource zum Abbilden des Aufwärtsverbindungssteuerkanals, der für das Senden der UCI verwendet werden soll, unter Verwendung einer einzigen Tabelle, die Sprungzeiten für jede Dauer des Aufwärtsverbindungssteuerkanals definiert,
wobei in der einzelnen Tabelle die Dauer des Aufwärtsverbindungssteuerkanals mit gemeinsamer Sprungzeitinformation assoziiert werden kann, die eine Sprungzeit zeigt, die gemeinsam für den Fall gilt, dass ein Index eines Startsymbols der geraden Zahl entspricht und für den Fall, dass der Index des Startsymbols der ungeraden Zahl entspricht, und
wobei eine Sprungzeit für eine spezifische Dauer, die in der einzelnen Tabelle definiert ist, auf der Grundlage eines Verhältnisses, das 50 % beträgt, der UCI und eines Demodulationsreferenzsignals, das auf eine gleiche Frequenzressource abgebildet wird, bestimmt wird, falls ein Index eines Startsymbols der geraden Zahl entspricht und falls der Index des Startsymbols der ungeraden Zahl entspricht.

## Revendications

1. Terminal (20) comprenant :
une unité de transmission (203) configurée pour transmettre des informations de commande de liaison montante, UCI, en utilisant un canal de commande de liaison montante ; et
une unité de commande (401) configurée pour commander une ressource de fréquence pour mapper le canal de commande de liaison montante à utiliser pour transmettre les UCI, en utilisant une table unique qui définit des synchronisations de saut pour chaque durée du canal de commande de liaison montante,
dans lequel, dans la table unique, la durée du canal de commande de liaison montante peut être associée à des informations de synchronisation de saut communes, qui indiquent une synchronisation de saut qui s'applique en commun au cas où un indice d'un symbole de départ correspond au nombre pair et au cas où l'indice du symbole de départ correspond au nombre impair, et
dans lequel une synchronisation de saut pour une durée spécifique définie dans la table unique est déterminée sur la base d'un rapport, qui est de 50 %, des UCI et d'un signal de référence de démodulation mappé sur une même ressource de fréquence dans le cas où un indice d'un symbole de départ correspond au nombre pair et dans le cas où l'indice du symbole de départ correspond au nombre impair.

2. Terminal selon la revendication 1, dans lequel, dans la table unique, une durée du canal de commande de liaison montante, de premières informations de synchronisation de saut qui indiquent une synchronisation de saut lorsqu'un indice d'un symbole de départ du canal de commande de liaison montante correspond à un nombre pair, et de secondes informations de synchronisation de saut qui indiquent une synchronisation de saut lorsque l'indice du symbole de départ correspond à un nombre impair, sont associées les unes aux autres.

3. Terminal selon la revendication 1 ou 2, dans lequel les synchronisations de saut définies dans la table unique sont déterminées de sorte que des synchronisations de saut pour un certain nombre de canaux de commande de liaison montante présentant un même indice de symbole de départ et présentant des durées qui sont différentes d'un nombre donné de symboles soient adaptées.

4. Procédé de communication radio pour un terminal (20), comprenant les étapes consistant à :
transmettre des informations de commande de liaison montante, UCI, en utilisant un canal de commande de liaison montante, et ;
commander une ressource de fréquence pour mapper le canal de commande de liaison montante à utiliser pour transmettre les UCI en utilisant une table unique qui définit des synchronisations de saut pour chaque durée du canal de commande de liaison montante,
dans lequel, dans la table unique, la durée du canal de commande de liaison montante peut être associée à des informations de synchronisation de saut communes, qui indiquent une synchronisation de saut qui s'applique en commun au cas où un indice d'un symbole de départ correspond au nombre pair et au cas où l'indice du symbole de départ correspond au nombre impair, et
dans lequel une synchronisation de saut pour une durée spécifique définie dans la table unique est déterminée sur la base d'un rapport, qui est de 50 %, des UCI et d'un signal de référence de démodulation mappé sur une même ressource de fréquence dans le cas où un indice d'un symbole de départ correspond au nombre pair et dans le cas où l'indice du symbole de départ correspond au nombre impair.
